(19) **Europäisches Patentamt / European Patent Office / Office européen des brevets**

(11) **EP 1 818 428 B1**

(12) **EUROPEAN PATENT SPECIFICATION**

(45) Date of publication and mention
of the grant of the patent:
**26.02.2014 Bulletin 2014/09**

(21) Application number: **05768944.0**

(22) Date of filing: **05.08.2005**

(51) Int Cl.:
*C25D 11/02* (2006.01)   *C25D 11/04* (2006.01)
*C25D 11/06* (2006.01)   *C25D 11/30* (2006.01)
*C23F 13/02* (2006.01)   *C25D 7/10* (2006.01)
*C25D 11/26* (2006.01)

(86) International application number:
**PCT/JP2005/014412**

(87) International publication number:
**WO 2005/118919 (15.12.2005 Gazette 2005/50)**

(54) **METHOD OF ELECTROLYTIC CERAMIC COATING FOR METAL, ELECTROLYTE FOR USE IN ELECTROLYTIC CERAMIC COATING FOR METAL AND METAL MATERIAL**

VERFAHREN ZUR ELEKTROLYTISCHEN KERAMIKBESCHICHTUNG FÜR METALL, ELEKTROLYT ZUR VERWENDUNG BEI DER ELEKTROLYTISCHEN KERAMIKBESCHICHTUNG FÜR METALL UND METALLMATERIAL

PROCÉDÉ DE REVÊTEMENT CÉRAMIQUE ÉLECTROLYTIQUE POUR MÉTAL, ÉLECTROLYTE POUR UTILISATION DANS UN REVÊTEMENT CÉRAMIQUE ÉLECTROLYTIQUE POUR MÉTAL ET MATéRIAU DE MéTAL

(84) Designated Contracting States:
**DE FR GB**

(30) Priority:  **05.11.2004   JP 2004321919**

(43) Date of publication of application:
**15.08.2007   Bulletin 2007/33**

(73) Proprietor: **NIHON PARKERIZING CO., LTD.**
**Tokyo 103-0027 (JP)**

(72) Inventors:
• **YOSHIOKA, Nobuaki; c/o Nihon Parkerizing Co., Ltd.**
  **Chuo-ku, Tokyo 1030027 (JP)**
• **MORI, Kazuhiko; c/o Nihon Parkerizing Co., Ltd.**
  **Chuo-ku, Tokyo 1030027 (JP)**
• **OKUHATA, Mitsuhiro; c/o Nihon Parkerizing Co., Ltd**
  **Chuo-ku, Tokyo 1030027 (JP)**
• **YAMASHITA, Masatoshi**
  **c/o Nihon Parkerizing Co., Ltd.**
  **Chuo-ku, Tokyo 1030027 (JP)**

• **IKEDA, Yoshihiro; c/o Nihon Parkerizing Co., Ltd.**
  **Chuo-ku, Tokyo 1030027 (JP)**

(74) Representative: **Albrecht, Thomas**
**Kraus & Weisert**
**Patent- und Rechtsanwälte**
**Thomas-Wimmer-Ring 15**
**80539 München (DE)**

(56) References cited:
**EP-A- 1 486 585        WO-A-99/37829**
**WO-A-03/029529        WO-A1-03/029529**
**DE-A1- 10 134 559     JP-A- 11 236 698**
**JP-A- 2003 171 794    US-A1- 2003 075 453**

• **ABE T ET AL: "Chemical conversion film prodn. on aluminium can shell - by applying chemical conversion soln. to aluminium can shell surface, maintaining shell in electric field and controlling electrode potential" WPI/THOMSON,, 1 January 1900 (1900-01-01), XP002420688**

EP 1 818 428 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

TECHNICAL FIELD

This invention relates to a method for forming a ceramic coating on the surface of a metal by conducting electrolysis, and an electrolyte for electrolytically depositing a ceramic coating on a metal well adapted for such method. This invention also relates to a metal member having a hard coating.

BACKGROUND ART

When a sliding member is produced from a light metal such as aluminum alloy, the sliding part of the sliding member is generally covered with a hard coating formed by anodization, electric plating, vapor deposition, or the like to thereby provide the sliding member with wear resistance. The anodization used in providing a valve metal such as aluminum with wear resistant coating is excellent in the covering power of the coating and in the reduced environmental stress since it does not use chromium, nickel, and the like, and accordingly, such method is widely adopted.

Among such anodized coatings, the anodized coating having improved wear resistance is called a hard anodized coating, and such hard anodized coating is generally formed by low temperature method. In this low temperature method, the anodization is conducted in an electrolytic bath containing sulfuric acid as its main component at a bath temperature of up to 10°C. In addition, the anodization is conducted in the low temperature method at a relatively high current density of 3 to 5 A/dm$^2$ compared to other anodization methods, and the hard anodized coating obtained by the low temperature method typically has a Vickers hardness of 300 to 500 Hv, and the coating is of a higher denseness compared to other anodized coatings.

Hard anodized coatings are currently used, for example, in the sliding part of aluminum alloy machine parts, and with the increase in the severity of the sliding conditions, further improvement in the wear resistance is awaited. In the meanwhile, hard anodized coatings of a high denseness involve a problem in that they are hard to form on an aluminum die cast alloy.

Another known method for forming a coating having a high surface hardness is anode spark discharge method wherein the coating is formed by using a spark discharge (see, for example, Patent Documents 1 to 3). In the conventional anode spark discharge methods, alkali metal silicate, alkali metal hydroxide, and oxygen acid catalyst have been used for the electrolyte.

Patent Documents 1 and 3 disclose a method wherein the treatment using a voltage as high as 600 V or higher is performed to produce a super-hard coating containing α-alumina as its chief component. The coating obtained by such method has an extremely high hardness as represented by the Vickers hardness in excess of 1500 Hv. In addition, while the maximum thickness of the coating which can be produced by the anodization using an ordinary alkaline electrolyte is approximately 10 μm, the thickness of the coating produced by such method can be as thick as 100 μm or more. Accordingly, a coating having improved wear resistance, corrosion resistance, and the like could be realized by increasing the thickness of the coating.

Other anode spark discharge methods have also been disclosed. Patent Documents 4 to 6 disclose methods using an electrolyte having a composition substantially the same as that of Patent Document 3 with a special current waveform to form a coating on the surface of a substrate at an efficiency higher than that of Patent Document 3.

Patent Document 7 discloses an anode spark discharge method in which smoothness, hardness, and coating speed have been improved by using not only silicate but also lithium ion and sodium or potassium ion.

PATENT DOCUMENT 1: JP 2002-508454 A
PATENT DOCUMENT 2: US 4082626
PATENT DOCUMENT 3: US 5616229
PATENT DOCUMENT 4: JP 58-17278 B
PATENT DOCUMENT 5: JP 59-28636 B
PATENT DOCUMENT 6: JP 59-28637 B
PATENT DOCUMENT 7: JP 9-310184 A

DISCLOSURE OF THE INVENTION

PROBLEMS TO BE SOLVED BY THE INVENTION

However, the coatings obtained by the conventional anode spark discharge methods described in Patent Documents 1 to 3 have a high surface roughness and a high hardness with low tenacity, and use of such coating for a sliding member without polishing results in the wear and scratches in the counterpart member, or equivalently, such coating has high likeliness of attacking the counterpart member. Accordingly, the coatings obtained by the conventional anode spark discharge methods cannot be used for a sliding member unless polished. In addition, polishing of such coating is difficult due to the extremely high hardness.

In the meanwhile, a large amount of electricity is consumed in the production of the coating, and the electricity is also required for the cooling of the electrolyte. Accordingly, the cost of the electricity is very high, and production of an excessively thick coating is economically disadvantageous. In such view, reduction in the thickness of the coating is highly desirable.

However, while reduction in the thickness contributes to the reduction in the surface roughness, the thin coating formed is likely to become destroyed in the course of sliding.

The methods described in Patent Documents 4 to 6 suffer from poor hardness of the resulting coating as well as low coating speed.

The method described in Patent Document 7 cannot realize the hardness and the wear resistance of the level equivalent to the coating obtained by the method described in Patent Document 3.

In view of the situation as described above, an object of the present invention is to provide a method for electrolytically depositing a ceramic coating on a metal which is capable of producing a coating having an excellent hardness, wear resistance and excellent tenacity despite its reduced thickness and less likeliness of attacking the counterpart member even if used for a sliding member without polishing. Another object of the present invention is to provide an electrolyte used in such method.

A further object of the present invention is to provide a metal member having excellent wear resistance and sliding properties.

MEANS TO SOLVE THE PROBLEMS

In order to realize the objects as described above, the inventors of the present invention made an extensive study and found that, when the electrolysis is conducted by using a metal as an anode in an electrolyte containing a zirconium compound, the coating formed on the surface of the metal will have excellent hardness, wear resistance and excellent tenacity despite its reduced thickness and its reduced thickness and less likeliness of attacking the counterpart member even if used for a sliding member without polishing. The method for electrolytically depositing a ceramic coating on a metal of the present invention and the electrolyte for use in electrolytic deposition of a ceramic coating on a metal of the present invention have been completed on the basis of such findings.

In the extensive study for realizing the objects as described above, the inventors of the present invention also found that, when a hard coating is provided on a metal substrate so that the hard coating comprises a continuous phase of an amorphous oxide containing the metal element that constitutes the metal substrate and zirconium and a dispersed phase of zirconium oxide microcrystals which are dispersed in the continuous phase, the metal member obtained will have excellent hardness, excellent wear resistance and sliding properties, excellent tenacity, and less likeliness of attacking the counterpart member even if used as a sliding member without polishing, and that such hard coating can be formed by conducting anode electrolysis or bipolar electrolysis in an electrolyte containing a zirconium compound. The metal member of the present invention has been completed on the basis of such findings.

Accordingly, the present invention provides the following (1) to (25).

(1) A method for electrolytically depositing a ceramic coating on a metal wherein an electrolytic treatment is conducted by using the metal as an anode in an electrolyte of a pH of at least 8 containing a water soluble zirconium carbonate compound selected from the group consisting of a zirconium ammonium carbonate and a zirconium potassium carbonate to thereby form a ceramic coating on a surface of the metal.

(2) The method for electrolytically depositing a ceramic coating on a metal according to the above (1), wherein the electrolyte further contains a water soluble phosphorus compound.

(3) The method for electrolytically depositing a ceramic coating on a metal according to the above (2), wherein the water soluble phosphorus compound is a condensed phosphate.

(4) The method for electrolytically depositing a ceramic coating on a metal according to any one of the above (1) to (3) wherein the electrolyte further contains an ion and/or an oxide of at least one metal selected from the group consisting of titanium, yttrium, calcium, magnesium, scandium, and cerium.

(5) The method for electrolytically depositing a ceramic coating on a metal according to any one of the above (1) to (4) wherein the electrolyte further contains poorly soluble particles of at least one member selected from the group consisting of oxide, hydroxide, phosphate, and carbonate.

(6) The method for electrolytically depositing a ceramic coating on a metal according to any one of the above (1) to (5) wherein the electrolytic treatment is carried out by a direct current electrolysis or a bipolar electrolysis using a voltage waveform in which an AC component is superposed on a DC component.

(7) The method for electrolytically depositing a ceramic coating on a metal according to any one of the above (1) to (6) wherein the electrolytic treatment is conducted by using a voltage waveform in which at least one pulse wave selected from the group consisting of rectangular wave, sine wave, and triangular wave having a duty ratio of up to 0.5 is superposed on a DC or AC component.

(8) The method for electrolytically depositing a ceramic coating on a metal according to the above (6) or (7) wherein the maximum value of the voltage waveform is at least 400 V.

(9) The method for electrolytically depositing a ceramic coating on a metal according to any one of the above (1) to (8) wherein the electrolytic treatment is conducted under glow discharge and/or arc discharge caused on the surface of the metal used as the anode.

(10) The method for electrolytically depositing a ceramic coating on a metal according to any one of the above (1) to (9) wherein the metal is selected from the group consisting of aluminum, titanium, niobium, magnesium, tantalum and the alloy thereof.

(11) An electrolyte for use in electrolytic deposition of a ceramic coating on a metal, containing water, a water soluble zirconium carbonate compound selected from the group consisting of a zirconium ammonium carbonate and a zirconium potassium carbonate, and at least one member selected from the group consisting of alkali metal ion, ammonium ion, and organic alkali at a pH of at least 8.0.

(12) The electrolyte for use in electrolytic deposition of a ceramic coating on a metal according to the above (11) wherein the electrolyte further contains a water soluble phosphorus compound.

(13) The electrolyte for use in electrolytic deposition of a ceramic coating on a metal according to the above (12) wherein the water soluble phosphorus compound is a condensed phosphate.

(14) The electrolyte for use in electrolytic deposition of a ceramic coating on a metal according to any one of the above (11) to (13) wherein the electrolyte further contains an ion and/or an oxide of at least one metal selected from the group consisting of titanium, yttrium, calcium, magnesium, scandium, and cerium.

(15) The electrolyte for use in electrolytic deposition of a ceramic coating on a metal according to any one of the above (11) to (14) wherein the electrolyte further contains poorly soluble particles of at least one member selected from the group consisting of oxide, hydroxide, phosphate, and carbonate.

(16) The electrolyte for use in electrolytic deposition of a ceramic coating on a metal according to any one of the above (11) to (15) wherein the electrolyte is used for electrolytically depositing a ceramic coating on a metal selected from the group consisting of aluminum, titanium, niobium, magnesium, tantalum and the alloy thereof.

(17) A metal member comprising a metal substrate and a hard coating on the metal substrate, wherein:

(i) the hard coating comprises an amorphous layer which is composed of an amorphous oxide containing a metal element constituting the metal substrate and zirconium, and zirconium oxide microcrystals dispersed in the amorphous oxide; or

(ii) the hard coating comprises a crystalline layer on the metal substrate and an amorphous layer on the crystalline layer, with the crystalline layer containing crystals of oxide of a metal element constituting the metal substrate, and the amorphous layer being composed of an amorphous oxide containing the metal element constituting the metal substrate and zirconium, and zirconium oxide microcrystals dispersed in the amorphous oxide;

wherein the zirconium oxide microcrystals in the hard coating are selected from the group consisting of tetragonal crystals and cubic crystals;
and the concentration distribution of the zirconium in the hard coating is such that the zirconium concentration gradually reduces from the surface of the hard coating toward the metal substrate.

(18) The metal member according to the above (17) (ii) wherein the crystalline layer further contains zirconium oxide microcrystals dispersed along a grain boundary and/or in a grain of the crystals of oxide of the metal element constituting the metal substrate.

(19) The metal member according to any one of the above (17) and (18) wherein, when the hard coating is analyzed by X ray diffractometry, relative peak intensity on (111) plane of tetragonal zirconium oxide and/or cubic zirconium oxide is equal to or higher than relative peak intensity of the main peak of the oxide of the metal element constituting the metal substrate.

(20) The metal member according to any one of the above (17) to (19) wherein, when the hard coating is analyzed by X ray diffractometry, proportion of volume of monoclinic zirconium oxide to the total of volume of the tetragonal zirconium oxide and/or the cubic zirconium oxide and volume of the monoclinic zirconium oxide is up to 0.5.

(21) The metal member according to any one of the above (17) to (20) wherein microcrystals of the tetragonal zirconium oxide and/or the cubic zirconium oxide have an average grain diameter of 0.25 to 500 nm.

(22) The metal member according to any one of the above (17) to (21) wherein a phosphorus oxide is present on a surface selected from the group consisting of a surface of the hard coating and an interface of the hard coating with the metal substrate.

(23) The metal member according to any one of the above (17) to (22) wherein the hard coating further contains at least one element selected from the group consisting of yttrium, calcium, cerium, scandium, magnesium, and titanium.
(24) The metal member according to any one of the above (17) to (23) wherein the metal element constituting the metal substrate is a metal selected from the group consisting of aluminum, titanium, niobium, magnesium, tantalum and the alloy thereof.
(25) The metal member according to any one of the above (17) to (24) produced by the method for electrolytically depositing a ceramic coating on a metal according to any one of the above (1) to (10).

EFFECTS OF THE INVENTION

The method of the invention for electrolytically depositing a ceramic coating on a metal is capable of forming an excellent coating on the surface of a metal which could not be realized by the conventional anodization such as anode spark discharge. The coating formed has excellent hardness and wear resistance as well as excellent tenacity despite its reduced thickness and even if used for a sliding member without polishing, it hardly attack the counterpart member.

The metal member of the present invention is a metal member which could not be realized by the conventional anodization such as hard anodization and anode spark discharge, or surface hardening such as adhesion of a sintered ceramic plate on the metal surface. The metal member of the invention has excellent hardness, excellent wear resistance and sliding properties, excellent tenacity, and even if used as a sliding member without polishing, it hardly attack the counterpart member.

BRIEF DESCRIPTION OF THE DRAWINGS

[FIG. 1] FIG. 1 is a graph showing voltage waveform and current density used in Example 1.
[FIG. 2] FIG. 2 is a graph showing voltage waveform and current density used in Example 8.
[FIG. 3] FIG. 3 is an optical micrograph (at a magnification of 500) of the cross-section of the coating obtained in Example 1.
[FIG. 4] FIG. 4 is an optical micrograph (at a magnification of 100) of the coating obtained in Comparative Example 2 along the sliding track after the friction wear test.
[FIG. 5] FIG. 5 (A) is a graph showing the X ray diffraction pattern for the coating obtained in Example 1, and FIG. 5(B) is a graph showing the X ray diffraction pattern for the coating obtained in Comparative Example 1.
[FIG. 6] FIG. 6 is a conceptual diagram of the metal member of the present invention. FIG. 6(A) shows a metal member comprising a metal substrate and a hard coating on the metal substrate, in which the hard coating comprises an amorphous layer. FIG. 6(B) shows a metal member comprising a metal substrate and a hard coating on the metal substrate, in which the hard coating comprises a crystalline layer and an amorphous layer.
[FIG. 7] FIG. 7(A) is a micrograph of the amorphous layer in the coating of the metal member produced in Example 14. FIG. 7(B) is a micrograph of the crystalline layer in the coating formed in Example 14.
[FIG. 8] FIG. 8(A) is an electron diffractogram at the location "a" in FIG. 7(A). FIG. 8(B) is an electron diffractogram at the location "b" in FIG. 7(A).
[FIG. 9] FIG. 9(A) is a graph showing the result of the qualitative analysis in depth direction obtained by glow discharge optical emission spectroscopy for the coating of the metal member produced in Example 16. FIG. 9(B) is a graph showing the result of the qualitative analysis in depth direction obtained by glow discharge optical emission spectroscopy for the coating of the metal member produced in Example 18.
[FIG. 10] FIGS. 10(A) to 10(F) are graphs showing the X ray diffraction patterns for the coatings of the metal members obtained in Examples 14, 17, 18, 19, 21 and 22, respectively.
[FIG. 11] FIGS. 11(A) to 11(C) are graphs showing the X ray diffraction patterns for the coatings of the metal members obtained in Comparative Examples 5, 7 and 8, respectively.

LEGEND

1: coating
2: aluminum plate
3: aluminum that became exposed in the friction wear test
10, 20: metal member
12, 22: metal substrate

14, 24: hard coating
16, 26: amorphous oxide
18, 28, 34: zirconium oxide microcrystal
30: crystalline layer
32: metal oxide crystal

BEST MODE FOR CARRYING OUT THE INVENTION

Next, the method for electrolytically depositing a ceramic coating on a metal, the electrolyte for use in electrolytic deposition of a ceramic coating on a metal, and the metal member of the present invention are described in detail. First, the method for electrolytically depositing a ceramic coating on a metal and the electrolyte for use in electrolytic deposition of a ceramic coating on a metal of the present invention are described.

The method for electrolytically depositing a ceramic coating on a metal of the present invention is a method in which an electrolytic treatment is conducted by using the metal as an anode in an electrolyte containing a zirconium compound to thereby form the ceramic coating on the metal surface.

The metal used in the electrolytic ceramic coating method of the present invention is not particularly limited. The metal, however, is preferably a valve metal or its alloy, on which an oxidized coating can be formed by electrolysis. More specifically, the metal is preferably at least one member selected from the group consisting of aluminum, magnesium, titanium, niobium, and alloys thereof.

The present invention is not limited to the case in which the metal is the matrix of a member, and the metal may be a coating such as a plated, or vapor deposited coating.

No particular pretreatment is necessary in forming the coating on the metal. However, in one preferable embodiment, the metal surface is preliminarily cleaned by degreasing, etching, or the like.

The electrolyte used in the electrolytic ceramic coating method of the present invention is an electrolyte containing water, a zirconium compound, and at least one member selected from the group consisting of alkali metal ion, ammonium ion, and organic alkali. For example, a preferable electrolyte contains water, a zirconium compound, and an alkali metal ion and/or an ammonium ion.

The zirconium compound is a water soluble zirconium compound since use of such water soluble zirconium compound enables production of a coating having a dense structure. For the same reason, when the electrolyte contains two or more zirconium compounds, at least one of the zirconium compounds is a water soluble zirconium compound, and more preferably, all of the zirconium compounds are water soluble zirconium compounds.

The water soluble zirconium compound is selected from the group consisting of zirconium ammonium carbonate and zirconium potassium carbonate.

Content of the zirconium compound in the electrolyte is preferably 0.0001 to 5 mol/L, and more preferably 0.001 to 0.5 mol/L in terms of zirconium.

Preferably, the electrolyte further contains a water soluble phosphorus compound. The water soluble phosphorus compound has the action of reducing surface roughness of the coating and improving the stability of the electrolyte.

While the water soluble phosphorus compound is not particularly limited, it is preferably a condensed phosphate or an organic phosphonate. Among others, the preferred is the condensed phosphate, and the more preferable is use of a pyrophosphate or a tripolyphosphate, which has chelating ability, and hence, is capable of stably retaining zirconium in the electrolyte without precipitation, and which also has alkaline buffering action to stabilize the pH and enable easy control of the pH.

Content of the phosphorus compound in the electrolyte is preferably 0.0001 to 1 mol/L, and more preferably 0.001 to 0.1 mol/L in terms of phosphorus.

When the electrolyte contains a condensed phosphate and/or an organic phosphonate, a phosphorus compound such as orthophosphate, hypophosphite, or phosphite may be used at a content ratio (molar ratio) of up to 0.5 in relation to the condensed phosphate and the organic phosphonate.

The electrolyte may further contain a peroxo compound such as aqueous hydrogen peroxide. Content of such peroxo compound in the electrolyte is preferably in the range of 0.001 to 1 mol/L.

The electrolyte may further contain an yttrium compound, a calcium compound, a titanium compound, a magnesium compound, a scandium compound, a cerium compound, and the like. Exemplary yttrium compounds include yttrium nitrate and yttrium oxide. Exemplary calcium compounds include calcium tartarate and calcium oxide. Exemplary titanium compounds include peroxotitanic acid compound and titanium oxide. Exemplary magnesium compounds include magnesium carbonate, magnesium phosphate, magnesium hydroxide, and magnesium oxide. Exemplary scandium compounds include scandium carbonate, scandium phosphate, and scandium oxide. Exemplary cerium compounds include cerium chloride, cerium hydroxide, cerium acetate, cerium carbonate, and cerium oxide.

More specifically, in one preferred embodiment of the present invention, the electrolyte contains the ion and/or an oxide of at least one metal selected from the group consisting of titanium, yttrium, calcium, magnesium, scandium, and cerium.

Inclusion of such compound in the electrolyte is believed to improve mechanical properties of the coating. In particular, inclusion of an yttrium compound or a calcium compound is believed to cause formation of partially stabilized zirconium which results in the improvement of the mechanical properties of the coating.

Such compound is preferably used at a content ratio of about 0.001 to 0.3, and more preferably about 0.005 to 0.1 in relation to the zirconium compound.

In addition, a lanthanoid compound may be incorporated in the electrolyte for similar purposes.

In another preferable embodiment of the present invention, the electrolyte further contains poorly soluble particles of at least one member selected from the group consisting of oxide, hydroxide, phosphate, and carbonate. Inclusion of such poorly soluble particles results in the faster formation of the coating, and hence, reduced time required for the coating treatment.

The metal or semi-metal used in such oxide, hydroxide, phosphate or carbonate is not particularly limited.

Examples of the poorly soluble particles include particles of zirconium oxide (zirconia), titanium oxide, iron oxide, tin oxide, silicon oxide (for example, silica sol), and cerium oxide; zirconium hydroxide, titanium hydroxide, and magnesium hydroxide; zirconium phosphate, titanium phosphate, calcium phosphate, zinc phosphate, and manganese phosphate; and calcium carbonate.

Among these, the preferred is zirconium oxide, and the more preferred are cubic zirconium dioxide and tetragonal zirconium dioxide.

The poorly soluble particles preferably have a particle diameter of up to 1 $\mu$m, and more preferably up to 0.3 $\mu$m. Dispersion of the particles in the electrolyte is facilitated when the particle diameter is within such range.

Content of the poorly soluble particles in the electrolyte is not particularly limited. The content, however, is preferably in the range of 0.3 to 300 g/L.

The electrolyte of the present invention contains at least one member selected from the group consisting of alkali metal ion, ammonium ion, and organic alkali.

For example, the electrolyte of the present invention may be an electrolyte prepared by dissolving or dispersing any of the zirconium-containing sodium salts, potassium salts and ammonium salts as above in water. In that case, at least some of the sodium salt, potassium salt, or ammonium salt may be replaced with an organic alkali.

The electrolyte may also contain sodium salts such as sodium hydroxide, various types of sodium silicate, various types of sodium phosphate, various types of sodium borate, and various types of sodium citrate; potassium salts such as potassium hydroxide, various types of potassium silicate, various types of potassium phosphate, various types of potassium borate, and various types of potassium citrate; and ammonium salts such as ammonium hydroxide, various types of ammonium silicate, various types of ammonium phosphate, various types of ammonium borate, and various types of ammonium citrate.

Concentration of the alkali metal ion and/or ammonium ion in the electrolyte is preferably 0.001 to 5 mol/L, and more preferably 0.01 to 0.5 mol/L.

Examples of the organic alkali which may be used to replace the alkali metal salt or the ammonium salt include quaternary ammonium salts such as tetraalkylammonium hydroxide (for example, tetramethylammonium hydroxide) and trimethyl-2-hydroxyethylammonium hydroxide; and organic amines such as trimethylamine, alkanolamine, and ethylenediamine.

The electrolyte is at a pH of at least 8.0, more preferably at a pH of at least 9.0, but the electrolyte is preferably at a pH of up to 13.5. When the pH is in such range, the coating can be formed at an improved efficiency, and a relatively reduced amount of the metal used as the anode will be dissolved.

Such alkaline electrolyte is prepared suitably by, for example, including an alkali metal hydroxide such as potassium hydroxide, sodium hydroxide, or lithium hydroxide in the electrolyte.

The electrolyte is not particularly limited for its temperature. The electrolyte, however, is typically used at 10 to 60°C. A temperature in such range is advantageous in view of economy, and will bring about a reduced dissolution of the metal used as the anode.

The electrolyte is not particularly limited for its production method, and the electrolyte may be produced by dissolving or dispersing the components as described above in a solvent. The solvent is preferably water while the solvent is not particularly limited.

In the method for electrolytically depositing a ceramic coating on a metal of the present invention, the electrolytic treatment is conducted in the electrolyte as described above, whereupon the metal as described above is used as the anode.

The method used for the electrolytic treatment is not particularly limited, and exemplary methods include direct current electrolysis, bipolar electrolysis, and pulse electrolysis. Among these, the preferred are bipolar electrolysis and pulse electrolysis since the electrolytic treatment is preferably conducted at a relatively high voltage as will be described later. Use of the direct current electrolysis is economically disadvantageous because of the boiling of the electrolyte.

In the bipolar electrolysis, the voltage waveform used preferably has an AC component superposed on a DC component.

In the pulse electrolysis, it is preferable to use the voltage waveform in which at least one pulse wave selected from the group consisting of rectangular wave, sine wave, and triangular wave having a duty ratio of up to 0.5 is superposed on a DC or AC component.

The conditions for the electrolytic treatment may be adequately selected depending on the metal and the electrolyte to be used. For example, when the electrolytic treatment (anodization) is carried out by bipolar electrolysis or pulse electrolysis in an alkaline electrolyte using aluminum as the anode, the voltage waveform preferably has a maximum value (peak voltage) of 300 to 800 V, and more preferably 400 to 800 V, and the current density at the positive peak is preferably 1 to 250 A/dm$^2$, and more preferably 20 to 150 A/dm$^2$.

Spark discharge is facilitated when the voltage waveform has a maximum value of at least 300 V, and in particular, at least 400 V.

Surface roughness of the coating will not be excessively high when the voltage waveform has a minimum value of up to 800 V.

When the current density at the positive peak is at least 1 A/dm$^2$, formation of the coating proceeds at a faster rate, and oxidation of the aluminum and crystallization of the zirconium oxide are facilitated. When the current density at the positive peak is up to 250 A/dm$^2$, the surface roughness of the coating can be reduced to a sufficient degree.

The electrolytic treatment is preferably conducted under the glow discharge and/or the arc discharge (spark discharge) from the metal. Such discharge stages can be confirmed by visually observing the surface of the anode metal during the treatment. Glow discharge is the phenomenon associated with the weak continuous light surrounding the entire surface, and arc discharge is the phenomenon associated with intermittent or local sparks. The glow discharge and the arc discharge may occur at once or separately. The temperature in the ark (spark) is said to be at least 1000°C, and this facilitates crystallization and deposition of the zirconium in the electrolyte.

The electrolytic bath may be cooled in order to keep the electrolyte temperature within the range as described above. Such cooling of the electrolytic bath is conducted in one preferred embodiment of the present invention.

The electrolytic treatment can be conducted for any period of time chosen in order to realize the desired coating thickness. It is generally preferred that the treatment time is 1 to 45 minutes, especially 5 to 30 minutes.

The electrolyzing apparatus to be used for the electrolytic treatment is not particularly limited, and any apparatus known in the art can be used as desired.

The coating obtained by the method for electrolytically depositing a ceramic coating on a metal of the present invention is not particularly limited for its thickness, and any thickness can be selected depending on the intended use of the coating. In general, the thickness is preferably 0.01 to 500 $\mu$m, and more preferably 0.5 to 50 $\mu$m. When the thickness is in such range, the resulting coating will exhibit improved impact resistance, and the time required for the electrolytic treatment will not be so long as to detract from the economic advantage.

In the present invention, a ceramic coating is formed on the surface of the metal as described above by conducting the electrolytic treatment as described above.

The mechanism of ceramic coating formation is not fully clear. However, it is conceived that, when the oxidized coating is formed on the metal by the electrolytic treatment, the zirconium in the electrolyte crystallizes as zirconium oxide to become incorporated in the coating, that is to say, a composite coating which contains an oxide of the metal used as the anode and an oxide of the zirconium is formed.

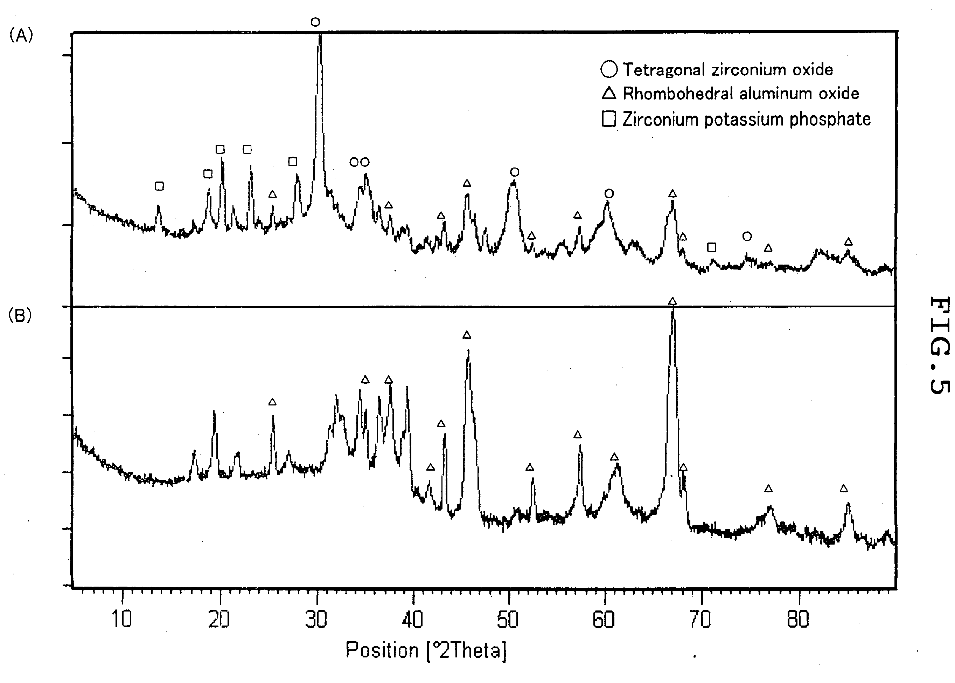

This ceramic coating preferably contains tetragonal zirconium oxide and/or cubic zirconium oxide as in the case of the coating obtained in Example 1 (see FIG. 5).

When a stress is applied to the tetragonal zirconium oxide (density, 6.10 g/cm$^3$), the tetragonal zirconium oxide typically transforms to the monoclinic zirconium oxide (density, 5.56 g/cm$^3$) at the end of the crack for stress relaxation. Because of such mechanism, zirconium oxide exhibits high tenacity despite its ceramic entity.

The cubic zirconium oxide is readily produced by incorporating calcium oxide, cerium oxide, or yttrium oxide, and the stabilized zirconia and/or partly stabilized zirconia produced exhibits high tenacity.

As described above, the ceramic coating formed by the present invention preferably contains the tetragonal zirconium oxide and/or the cubic zirconium oxide, and this is considered to result in the coating which is improved not only in hardness but also tenacity. For a substance in the form of a thin film, no convenient measurement for tenacity has been known yet, and therefore, the coating may be evaluated for its tenacity by evaluating ductility, which is one element of the tenacity.

The method for electrolytically depositing a ceramic coating on a metal of the present invention can be used for any desired application. For example, when an extremely hard ceramic coating is formed on the surface of a metal such as aluminum or magnesium having a low hardness, the metal can suitably be used for a sliding member which could not be made of such soft metal, or a member which is required to have a hardness higher than the conventional anodized coating (for example, hard anodized aluminum coating). The ceramic coating is preferable because it is less likely to damage the counterpart member even if used for a sliding member without polishing.

The ceramic coating produced by the method for electrolytically depositing a ceramic coating on a metal of the present invention is also useful as a protective coating of various members. Since the ceramic coating produced by the method for electrolytically depositing a ceramic coating on a metal of the present invention contains zirconium oxide, it is excellent in such properties as heat resistance, heat shock resistance, and corrosion resistance. Accordingly, the ceramic coating is well adapted for the application to a furnace material for a shaft furnace, a chamber inner wall of a semiconductor production equipment, and the like.

Next, the metal member of the present invention is described.

First aspect of the metal member of the present invention is a metal member comprising a metal substrate and a hard coating on the metal substrate, in which the hard coating comprises an amorphous layer which is composed of an amorphous oxide containing a metal element constituting the metal substrate and zirconium, and zirconium oxide microcrystals dispersed in the amorphous oxide.

Second aspect of the metal member of the present invention is a metal member comprising a metal substrate and a hard coating on the metal substrate, in which the hard coating comprises a crystalline layer on the metal substrate and an amorphous layer on the crystalline layer, and in which the crystalline layer contains crystals of oxide of a metal element constituting the metal substrate, and the amorphous layer is composed of an amorphous oxide containing the metal element constituting the metal substrate and zirconium, and zirconium oxide microcrystals dispersed in the amorphous oxide.

The metal member according to the first aspect of the present invention is different from the metal member according to the second aspect of the present invention in that the crystalline layer is absent in the hard coating. These metal members share other features, and accordingly, the metal members are described together.

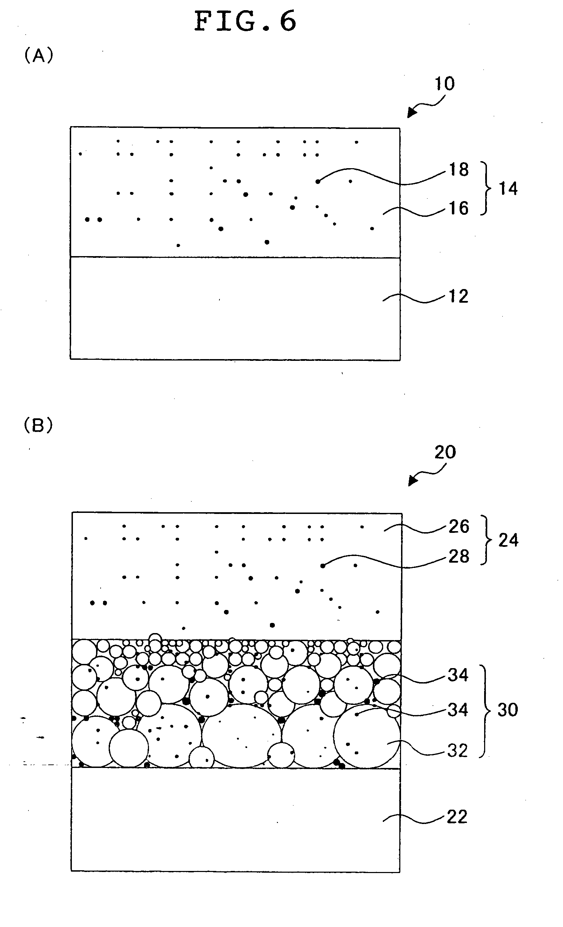

FIG. 6 is a conceptual diagram of the metal member of the present invention. FIG. 6(A) shows a metal member comprising a metal substrate and a hard coating on the metal substrate, in which the hard coating comprises an amorphous layer according to the first aspect of the present invention. FIG. 6(B) shows a metal member comprising a metal substrate and a hard coating on the metal substrate, in which the hard coating comprises a crystalline layer and an amorphous layer according to the second aspect of the present invention.

A metal member 10 according to the first aspect of the present invention shown in FIG. 6(A) comprises a metal substrate 12 and a hard coating on the metal substrate 12. The hard coating comprises an amorphous layer 14 which is composed of an amorphous oxide 16 containing a metal element constituting the metal substrate 12 and zirconium, and zirconium oxide microcrystals 18 dispersed in the amorphous oxide.

A metal member 20 according to the second aspect of the present invention shown in FIG. 6(B) comprises a metal substrate 22 and a hard coating on the metal substrate 22. The hard coating comprises a crystalline layer 30 on the metal substrate 22 and an amorphous layer 24 on the crystalline layer 30. The crystalline layer contains crystals 32 of oxide of a metal element constituting the metal substrate 22, and the amorphous layer is composed of an amorphous oxide 26 containing the metal element constituting the metal substrate 22 and zirconium, and zirconium oxide microcrystals 28 dispersed in the amorphous oxide.

In the second aspect of the present invention, it is preferable that the crystalline layer 30 further contains zirconium oxide microcrystals 34 dispersed along a grain boundary and/or in a grain of the crystals 32 of the oxide of the metal element constituting the metal substrate 22 as shown in FIG. 6(B).

In the second aspect of the present invention, part of the crystalline layer may be left uncovered with the amorphous layer, and the uncovered part of the crystalline layer may remain exposed.

The metal substrate used in the metal member of the present invention is preferably a substrate comprising a valve metal or its alloy. Examples of the valve metal include aluminum, titanium, niobium, magnesium, and tantalum.

Among others, the substrate comprising at least one member selected from the group consisting of aluminum, titanium, magnesium, and alloys thereof is preferred. Use of such substrate facilitates formation of a hard coating by anode electrolysis or bipolar electrolysis.

The present invention is not limited to the case in which the metal is the matrix of a member, and the metal may be a coating such as a plated, or vapor deposited coating.

The amorphous layer is a layer which is composed of an amorphous oxide containing the metal element constituting the metal substrate and zirconium, and zirconium oxide microcrystals dispersed in the amorphous oxide.

The amorphous oxide is an oxide in amorphous (non-crystalline) state, and it contains the metal element constituting the metal substrate and zirconium. For example, when the aluminum is the metal element constituting the metal substrate, that is to say, the metal substrate is made of aluminum or its alloy, the amorphous oxide contains aluminum and zirconium.

The zirconium oxide microcrystals are micro grains of zirconium oxide crystal. The zirconium oxide microcrystals in the amorphous layer preferably have a grain diameter of 0.1 to 1000 nm.

When the zirconium oxide microcrystals have an excessively small grain diameter, the hard coating is likely to have a reduced hardness and wear resistance. When the grain diameter is excessively large, the coating will have an increased likeliness of attacking the counterpart member and the amorphous layer is likely to decrease in strength.

The shape of the zirconium oxide microcrystals is not particularly limited, and exemplary shapes include sphere shape, needle shape, and plate shape. When the zirconium oxide microcrystals are not spherical, the minor axis is preferably 0.25 to 250 nm and the major axis is preferably 1 to 500 nm for the same reason as described above.

The zirconium oxide microcrystals are tetragonal zirconium oxide and/or cubic zirconium oxide, as will be described later. In such a case, the zirconium oxide microcrystals preferably have an average grain diameter of 0.25 to 500 nm.

The zirconium oxide microcrystals are not particularly limited for their state of dispersion. Preferably, at least one zirconium oxide microcrystal, and more preferably $10^2$ to $10^4$ zirconium oxide microcrystals per cubic micrometer of the amorphous layer are present in the layer.

The crystalline layer is a layer containing the crystals of an oxide of the metal element constituting the metal substrate as above (hereinafter also referred to as "oxide of the substrate metal"). For example, when the aluminum is the metal element constituting the metal substrate, that is to say, the metal substrate is made of aluminum or its alloy, the crystals are aluminum oxide crystals. In such a case, the crystals are preferably cubic aluminum oxide because, when the metal member according to the second aspect of the present invention is used as a sliding member, rhombohedral aluminum oxide present in the hard coating in a large amount will result in an increased likeliness of attacking the counterpart member.

The crystals of the oxide of the substrate metal preferably have a grain diameter of up to 10 $\mu$m, and more preferably up to 3 $\mu$m. When the grain diameter is excessively large, voids (gaps) are likely to be formed in the crystalline layer, and the layer is likely to be destroyed from the periphery of such voids upon sliding.

As described above, it is preferable that the crystalline layer further contains zirconium oxide microcrystals dispersed along a grain boundary and/or in a grain of the crystals of the oxide of the metal element constituting the metal substrate.

The zirconium oxide microcrystals in the crystalline layer is not particularly limited for its grain diameter when they are present along the grain boundary of the crystals of the oxide of the substrate metal. However, when they are present in the grains of the crystals of the oxide of the substrate metal, the grain diameter is preferably 0.1 to 250 nm, and more preferably 1 to 50 nm.

In the crystalline layer, the crystals of the oxide of the substrate metal preferably have a grain diameter reducing from the interface with the metal substrate toward the interface with the amorphous layer because the hard coating will then have a remarkably improved wear resistance, impact resistance, and adhesion to the metal substrate.

The shape of the zirconium oxide microcrystals is not particularly limited, and exemplary shapes include sphere shape, needle shape, and plate shape. When the zirconium oxide microcrystals are in needle shape, the major axis is preferably within the range as defined above.

The zirconium oxide microcrystals are tetragonal zirconium oxide and/or cubic zirconium oxide, as will be described later. In such a case, the zirconium oxide microcrystals preferably have an average grain diameter of 0.1 to 250 nm.

The zirconium oxide microcrystals are not particularly limited for their state of dispersion. Preferably, $10^2$ to $10^6$ zirconium oxide microcrystals per cubic micrometer of the crystalline layer are included in the layer.

In the metal members according to the first and second aspects of the present invention, the concentration distribution of the zirconium in the hard coating is such that the zirconium concentration gradually reduces from the surface of the hard coating toward the metal substrate. While an abrupt change in physical properties at the interface between a hard coating and a metal substrate invites stress concentration at the interface and sometimes causes the peeling and destroying of the coating, the concentration distribution as described above will well prevent such peeling or destroying.

In the metal members according to the first and second aspects of the present invention, the zirconium oxide microcrystals in the hard coating are tetragonal crystals and/or cubic crystals. When the zirconium oxide having crystallized into the tetragonal crystals and/or the cubic crystals with excellent mechanical properties is included in the hard coating, stress relaxation will occur under mechanical deformation or heat, and the hard coating will have a remarkably improved wear resistance.

In the metal members according to the first and second aspects of the present invention, when the hard coating is analyzed by X ray diffractometry, the relative peak intensity on (111) plane of the tetragonal zirconium oxide and/or cubic zirconium oxide is preferably equal to or higher than the relative peak intensity of the main peak of the oxide of the substrate metal. The zirconium oxide microcrystals will then have a sufficiently improved degree of crystallization, resulting in improved impact resistance and wear resistance of the hard coating.

In the metal members according to the first and second aspect of the present invention, when the hard coating is analyzed by X ray diffractometry, the proportion ($V_m$) of the volume of monoclinic zirconium oxide to the total of the volume of the tetragonal zirconium oxide and/or the cubic zirconium oxide and the volume of the monoclinic zirconium oxide is preferably up to 0.5, and more preferably up to 0.3. When the $V_m$ is within such range, the stress relaxation under stress by the monoclinic crystals will be less reduced, and the hard coating will have improved impact resistance and wear resistance.

The $V_m$ is calculated from the X ray diffraction intensity by the following equation:

$$V_m = \{I(-111)_m + I(111)_m\}$$
$$/ \{I(-111)_m + I(111)_m + I(111)_{tc}\} \qquad (1)$$

$V_m$: proportion of the volume of the monoclinic zirconium oxide to the total of the volume of the tetragonal zirconium oxide and/or the cubic zirconium oxide and the volume of the monoclinic zirconium oxide.

$I(111)_{tc}$: relative peak intensity on (111) plane of the tetragonal zirconium oxide and/or the cubic zirconium oxide.
$I(-111)_m$: relative peak intensity on (-111) plane of the monoclinic zirconium oxide.
$I(111)_m$: relative peak intensity on (111) plane of the monoclinic zirconium oxide.

The peak on (111) plane of the tetragonal zirconium oxide is difficult to distinguish from the peak on (111) plane of the cubic zirconium oxide, so that the relative intensities of these peaks are to be employed as the $I(111)_{tc}$ without discrimination.

In one preferred embodiment, the hard coating further contains at least one element selected from the group consisting of yttrium, calcium, cerium, scandium, magnesium, and titanium. It is preferable in particular that such element is included in the interior or in the vicinity of the zirconium oxide microcrystals.

Yttrium, calcium, cerium, scandium, and magnesium each have the action of stabilizing the tetragonal and/or cubic crystal state of the zirconium oxide. Titanium has the action of improving mechanical properties such as flexural strength of the hard coating.

Such element is preferably contained at a content ratio of up to 0.1 in relation to the zirconium.

In addition, such element is preferably present in the form of an oxide.

Preferably, the hard coating further contains a phosphorus oxide so that the hard coating may have an improved initial contact property in the sliding.

The phosphorus oxide may be crystalline or amorphous, and examples of such phosphorus oxide include phosphorus oxides such as diphosphorus pentoxide; phosphates such as zirconium phosphate, zirconium potassium phosphate, zirconium sodium phosphate, zirconium silicophosphate, aluminum phosphate, titanium phosphate, magnesium phosphate, calcium phosphate, and cerium phosphate; and polyphosphates such as zirconium pyrophosphate, aluminum pyrophosphate, calcium pyrophosphate, zirconium polyphosphate, and aluminum tripolyphosphate.

The phosphorus oxide is incorporated in the hard coating at a content of preferably up to 15% by weight, and more preferably 0.1 to 5% by weight in terms of $P_2O_5$ in relation to the entire coating. When the content is within such range, the coating will have an improved hardness with a reduced surface roughness.

The hard coating is not particularly limited for its thickness, and any thickness can be selected depending on the intended use of the resulting member. In general, the thickness is preferably 0.01 to 500 $\mu$m, and more preferably 0.5 to 50 $\mu$m. When the thickness is in such range, the resulting coating will exhibit improved impact resistance, and the time required for the electrolytic treatment will not be so long as to detract from the economic advantage.

In the second aspect of the present invention, the ratio of the thickness of the crystalline layer to the thickness of the hard coating (namely, total of the thickness of the amorphous layer and the thickness of the crystalline layer) is preferably 0.01 to 0.95, and more preferably 0.1 to 0.9. When the thickness ratio is within such range, the amorphous layer will have a sufficient thickness, and the hard coating will have an improved contact property.

The surface of the hard coating preferably has a center line average roughness of 0.01 to 10 $\mu$m, more preferably 0.1 to 3 $\mu$m. When the center line average roughness is within such range, a higher oil retention and a lower surface roughness are attained concurrently, and the likeliness of attacking the counterpart member can thus be reduced.

The method used for producing the metal member of the present invention is not particularly limited. For instance, the metal member can be produced by conducting electrolysis such as direct current electrolysis, bipolar electrolysis and pulse electrolysis using the metal substrate as an anode.

Before the electrolysis, the metal substrate is preferably degreased for removal of oil components on the surface of the metal substrate. The metal substrate may optionally be pickled for removal of oxide film formed on the surface of the metal substrate.

The electrolysis is preferably conducted under spark discharge (arc discharge) and/or glow discharge by using a high voltage with the peak voltage of 300 V or higher.

The surface of the metal substrate is hardened (by the formation of the hard coating) by the temporal and local melting and solidifying of the surface during the spark discharge.

The temperature of the surface upon melting is said to be at least 1000°C, and the formation of the amorphous oxide is facilitated because the surface is quenched by the electrolyte simultaneously with the intake of the oxygen generated at the anode.

The electrolysis is preferably carried out by bipolar electrolysis or pulse electrolysis since high current density arises during the spark discharge. Use of a DC voltage is not preferable because the electrolyte is likely to boil due to the excessively high current density to result in the formation of voids in the hard coating.

The current density is preferably 1 to 250 A/dm$^2$, and more preferably 20 to 150 A/dm$^2$ at its peak. When the current density is within such range, formation of the hard coating proceeds at a sufficiently fast rate, and crystallization of the zirconium oxide is facilitated, and also, the surface roughness of the coating is hardly increased.

The electrolysis is preferably conducted by using an electrolyte containing water and a zirconium compound, and more preferably, by using the above-mentioned electrolyte for use in electrolytic deposition of a ceramic coating on a metal according to the present invention which contains water, a zirconium compound, and at least one member selected from the group consisting of alkali metal ion, ammonium ion, and organic alkali.

When such electrolyte is used, zirconium is incorporated in the hard coating, and as a consequence, growth of the crystal grains of the oxide of the substrate metal is suppressed, and formation of a dense surface structure is facilitated. By the incorporation of the zirconium oxide in the form of microcrystals of tetragonal zirconium oxide and/or cubic zirconium oxide in the hard coating, the fracture toughness and other mechanical properties of the hard coating are improved.

Use of the method for electrolytically depositing a ceramic coating on a metal of the present invention is particularly preferable.

The difference between the metal member according to the first aspect of the present invention and the metal member according to the second aspect of the present invention is the presence of the crystalline layer in the hard coating of the latter metal member. Formation of the crystalline layer can be achieved or prevented by appropriately setting such conditions as the voltage for electrolysis and the zirconium concentration of the electrolyte.

For example, the crystalline layer is more likely to be formed at a higher voltage presumably because of the increase in the thermal energy under the spark discharge associated with the increase in the current density. More specifically, the crystalline layer is likely to be formed when the maximum voltage value is 600 V or higher.

Also, the crystalline layer is more likely to be formed at a lower zirconium concentration presumably because the crystallization of the oxide of the metal substrate is suppressed by the zirconium. More specifically, the crystalline layer is likely to be formed when the zirconium concentration of the electrolyte is 0.015 mol/L or less.

The mechanism of the dispersion of the zirconium oxide microcrystals in the amorphous oxide (and in the amorphous layer and the crystalline layer in some cases of the second aspect of the present invention) is not yet clear. However, the excessive increase in the size of the zirconium oxide microcrystals is believed to be suppressed because of a short discharging time upon spark discharge and so forth in the order of several microseconds, and the presence of the metal element constituting the metal substrate that has dissolved in the electrolyte.

The metal member of the present invention is not particularly limited for its application. For example, even if a metal member is produced by using a metal substrate made of a soft metal such as aluminum or magnesium, such member can be used for the sliding member for which the conventional metal member produced by using such soft metal could not be used. Exemplary applications include interior surface of an aluminum engine cylinder, a piston, a shaft, parts of a rotary compressor, parts of a pump, an aluminum wheel, a propeller, an agitation blade, a valve, a cum, a shaft, and a wire.

The metal member of the present invention can also be used for the purpose of protecting various members. In particular, the metal member of the present invention is excellent in such properties as heat resistance, heat shock resistance, and corrosion resistance since the hard coating contains oxide of zirconium. Accordingly, the metal member is well adapted for the application to a furnace material for a shaft furnace, a chamber inner wall of a semiconductor production equipment, and the like.

EXAMPLES

Next, the present invention is described in further detail by referring to the Examples which by no means limit the scope of the present invention.

<A. Examples of the method for electrolytically depositing a ceramic coating on a metal according to the present invention>

1. Electrolytic treatment

(Example 1)

Electrolytic treatment was conducted for 10 minutes by bipolar electrolysis using an aluminum plate (a plate of JIS 1000) having a surface area of 0.12 dm$^2$ for the anode and a stainless steel plate for the cathode to thereby deposit a coating on the aluminum plate. When the anode surface was observed during the electrolytic treatment, light emission by spark discharge and glow discharge was recognized.

The electrolyte used was an electrolyte (pH 11.7) prepared by adding 0.01 mol/L of zirconium potassium carbonate, 0.015 mol/L of sodium pyrophosphate, and 0.036 mol/L of potassium hydroxide to water.

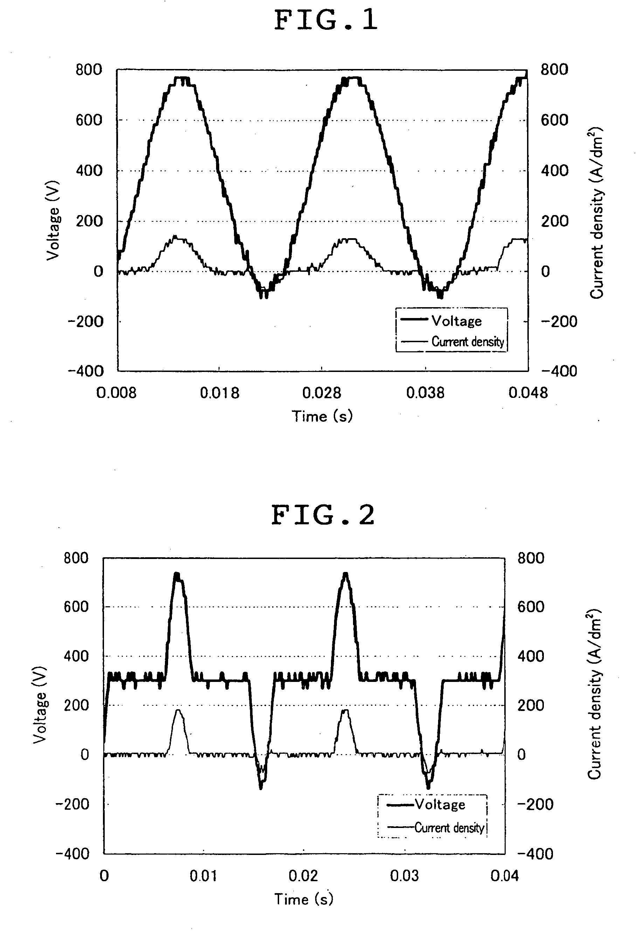

The voltage waveform used was the one having a frequency of 60 Hz comprising an AC component at 300 V superposed with a DC component having an effective value of 300 V. The voltage used had the maximum value of about 720 V and the minimum value of about -120 V. The current density had a positive peak of about 150 A/dm$^2$ and a negative peak of about 70 A/dm$^2$. The voltage waveform and the current density of this Example are shown in the graph of FIG. 1.

(Example 2)

The electrolytic treatment was conducted by repeating the procedure of Example 1 to form a coating on the aluminum plate except that the electrolyte used was the one having a pH of 11.8 prepared by adding 0.01 mol/L of zirconium potassium carbonate and 0.036 mol/L of potassium hydroxide to water. When the anode surface was observed during the electrolytic treatment, light emission by spark discharge and glow discharge was recognized.

(Example 3)

The electrolytic treatment was conducted by repeating the procedure of Example 1 to form a coating on the aluminum plate except that the electrolyte used was the one having a pH of 11.6 prepared by adding 0.01 mol/L of zirconium potassium carbonate, 0.015 mol/L of sodium pyrophosphate, 0.036 mol/L of potassium hydroxide, and 0.02 mol/L of hydrogen peroxide to water. When the anode surface was observed during the electrolytic treatment, light emission by spark discharge and glow discharge was recognized.

(Example-4) (not according to the invention)

The electrolytic treatment was conducted by repeating the procedure of Example 1 to form a coating on the aluminum plate except that the electrolyte used was the one having a pH of 12.7 prepared by adding 0.01 mol/L of zirconium hydroxide, 0.015 mol/L of sodium pyrophosphate, and 0.036 mol/L of potassium hydroxide to water. When the anode surface was observed during the electrolytic treatment, light emission by spark discharge and glow discharge was recognized.

(Example 5) (not according to the invention)

The electrolytic treatment was conducted by repeating the procedure of Example 1 to form a coating on the aluminum plate except that the electrolyte used was the one having a pH of 8.9 prepared by adding 0.01 mol/L of zirconium acetate, 0.01 mol/L of sodium citrate dihydrate, and 0.009 mol/L of potassium hydroxide to water, and the electrolytic treatment was conducted for 20 minutes. When the anode surface was observed during the electrolytic treatment, light emission by spark discharge and glow discharge was recognized.

(Example 6) (not according to the invention)

The electrolytic treatment was conducted by repeating the procedure of Example 1 to form a coating on the aluminum plate except that the electrolyte used was the one having a pH of 12.1 prepared by adding 0.01 mol/L of zirconium acetate, 0.01 mol/L of sodium citrate dihydrate, and 0.036 mol/L of potassium hydroxide to water. When the anode surface was observed during the electrolytic treatment, light emission by spark discharge and glow discharge was recognized.

(Example 7)

The electrolytic treatment was conducted by repeating the procedure of Example 1 to form a coating on the aluminum plate except that the voltage waveform used was the one having a frequency of 60 Hz comprising a DC component at 250 V superposed with an AC component having an effective value of 250 V, and the voltage used had a maximum value of about 600 V and a minimum value of about - 100 V. When the anode surface was observed during the electrolytic treatment, light emission by spark discharge and glow discharge was recognized.

(Example 8)

The electrolytic treatment was conducted by repeating the procedure of Example 1 to form a coating on the aluminum plate except that the electrolytic treatment was conducted by pulse electrolysis using a voltage waveform comprising a DC component at 300 V superposed with a pulse wave having an amplitude of 420 V. The voltage values were the same as those of Example 1, with a maximum value of about 720 V and a minimum value of about -120 V. When the anode surface was observed during the electrolytic treatment, light emission by spark discharge and glow discharge was recognized. The voltage waveform and the current density of this Example are shown in the graph of FIG. 2.

(Example 9)

The electrolytic treatment was conducted by repeating the procedure of Example 1 to form a coating on the aluminum plate except that the electrolyte used was the one having a pH of 11.4 prepared by adding 0.01 mol/L of zirconium potassium carbonate, 0.0001 mol/L of yttrium oxide, 0.015 mol/L of sodium pyrophosphate, and 0.025 mol/L of sodium hydroxide to water. When the anode surface was observed during the electrolytic treatment, light emission by spark discharge and glow discharge was recognized.

(Example 10) (not according to the invention)

The electrolytic treatment was conducted by repeating the procedure of Example 1 to form a coating on a magnesium alloy plate except that a magnesium alloy plate (a plate of JIS AZ91D) having a surface area of 0.12 dm$^2$ was used for the anode, and the electrolyte used was the one having a pH of 13.0 prepared by adding 0.05 mol/L of stabilized zirconia (poorly soluble particles having a particle size about 0.3 $\mu$m), 0.01 mol/L of peroxotitanic acid (prepared by dissolving hydrated titanium oxide gel in aqueous hydrogen peroxide), 0.015 mol/L of sodium pyrophosphate, and 0.130 mol/L of sodium hydroxide to water. When the anode surface was observed during the electrolytic treatment, light emission by spark discharge and glow discharge was recognized.

(Example 11) (not according to the invention)

The electrolytic treatment was conducted by repeating the procedure of Example 10 to form a coating on the magnesium alloy plate except that the electrolyte used was the one having a pH of 12.8 prepared by adding 0.01 mol/L of zirconium acetate, 0.05 mol/L of calcium carbonate (poorly soluble particles having a particle size of about 0.6 $\mu$m), 0.015 mol/L of sodium pyrophosphate, and 0.150 mol/L of potassium hydroxide to water, and the electrolytic treatment was conducted by using a voltage waveform having a frequency of 60 Hz comprising a DC component at 250 V superposed with an AC component having an effective value of 250 V, and the voltage having a maximum value of about 600 V and a minimum value of about -100 V. When the anode surface was observed during the electrolytic treatment, light emission by spark discharge and glow discharge was recognized.

(Example 12)

The electrolytic treatment was conducted by repeating the procedure of Example 11 to form a coating on a titanium alloy plate except that a titanium alloy plate (a plate of JIS 60, i.e., the so called 6-4 alloy plate) having a surface area of 0.12 dm$^2$ was used for the anode, and the electrolyte used was the one having a pH of 10.5 prepared by adding 0.01 mol/L of zirconium potassium carbonate, 0.05 mol/L of hydrogen peroxide, 0.03 mol/L of anatase titanium dioxide (poorly soluble particles having a particle size of about 0.15 $\mu$m), 0.015 mol/L of sodium pyrophosphate, and 0.010 mol/L of tetramethylammonium hydroxide (TMAH) to water. When the anode surface was observed during the electrolytic treatment, light emission by spark discharge and glow discharge was recognized.

(Example 13)

The electrolytic treatment was conducted by repeating the procedure of Example 11 to form a coating on the magnesium alloy plate except that the electrolyte used was the one having a pH of 12.5 prepared by adding 0.01 mol/L of zirconium potassium carbonate, 0.01 mol/L of silica sol (poorly soluble particles having a particle size of about 0.05 $\mu$m), 0.002 mol/L of cerium dioxide (poorly soluble particles having a particle size of about 0.2 $\mu$m), 0.015 mol/L of sodium pyrophosphate, and 0.100 mol/L of potassium hydroxide to water. When the anode surface was observed during the electrolytic treatment, light emission by spark discharge and glow discharge was recognized.

(Comparative Example 1)

The electrolytic treatment was conducted by repeating the procedure of Example 1 to form a coating on the aluminum plate except that the electrolyte used was the one having a pH of 12.5 prepared by adding 0.01 mol/L of sodium metasilicate nonahydrate, 0.015 mol/L of sodium pyrophosphate, and 0.036 mol/L of potassium hydroxide to water, and the current density had a positive peak of about 200 A/dm$^2$ and a negative peak of about 100 A/dm$^2$. When the anode surface was observed during the electrolytic treatment, light emission by spark discharge and glow discharge was recognized.

(Comparative Example 2)

The electrolytic treatment was conducted by repeating the procedure of Example 8 to form a coating on the aluminum plate except that the electrolyte used was the one having a pH of 12.5 prepared by adding 0.01 mol/L of sodium metasilicate nonahydrate, 0.015 mol/L of sodium pyrophosphate, and 0.036 mol/L of potassium hydroxide to water. When the anode surface was observed during the electrolytic treatment, light emission by spark discharge and glow discharge was recognized.

(Comparative Example 3)

The electrolytic treatment was conducted by repeating the procedure of Example 1 to form a coating on the aluminum plate except that the electrolyte used was the one having a pH of 12.7 prepared by adding 0.015 mol/L of sodium pyrophosphate and 0.036 mol/L of potassium hydroxide to water, and the current density had a positive peak of about 200 A/dm$^2$ and a negative peak of about 100 A/dm$^2$. When the anode surface was observed during the electrolytic treatment, light emission by spark discharge and glow discharge was recognized.

(Comparative Example 4)

The electrolytic treatment was conducted by repeating the procedure of Example 1 to form a coating on the aluminum plate except that the electrolyte used was the one having a pH of 12.7 prepared by adding 0.015 mol/L of sodium pyrophosphate and 0.036 mol/L of potassium hydroxide to water, the voltage waveform used was the one having a frequency of 60 Hz comprising DC component at 200 V superposed with AC component at an effective value of 100V, and the voltage used had the maximum value of about 340 V and the minimum value of about 60 V. When the anode surface was observed during the electrolytic treatment, no light emission by either spark discharge or glow discharge was not recognized.

2. Evaluation of the coating

The coatings prepared in Examples 1 to 13 and Comparative Examples 1 to 4 were evaluated for the following items.

(1) Observation of the cross-section of the coating

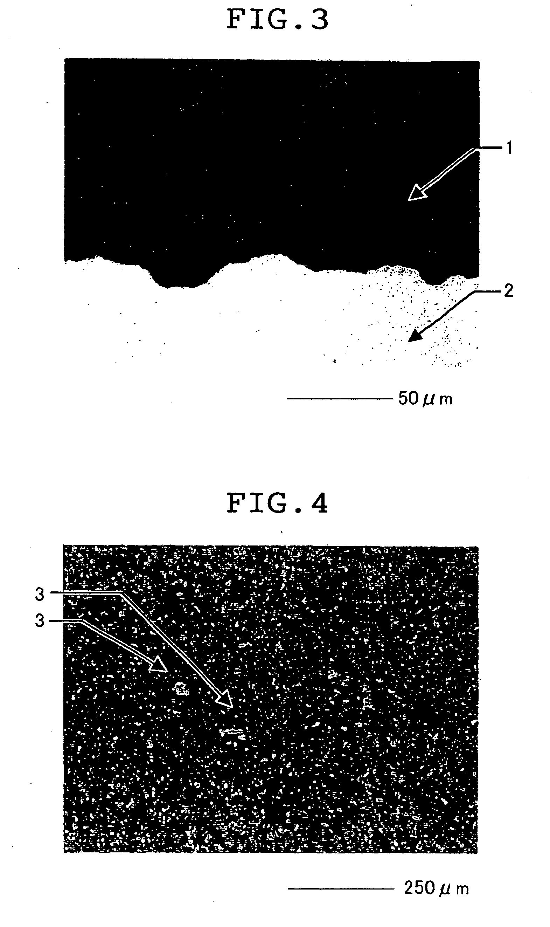

The cross-section of the coating obtained in Example 1 was observed under a metallurgical microscope (manufactured by Olympus Corporation). The aluminum plate having the coating formed on its surface produced in Example 1 was cut to expose the cross-section, and after impregnating the surface of the cross-section with a resin and curing the resin, the surface was polished to prepare a cross-section for observation. A micrograph was taken at a magnification of 500.
The results are shown in FIG. 3 which is an optical micrograph (taken at a magnification of 500) of the cross-section of the coating produced in Example 1. FIG. 3 confirms that a coating 1 had been formed on the surface of the aluminum plate 2 in Example 1.

(2) Thickness of the coating

The coatings produced in Examples 1 to 13 and Comparative Examples 1 to 4 were measured for their thickness by eddy current coating thickness tester (manufactured by Kett Electric Laboratory).
The results are shown in Table 1.

(3) Ten point average roughness

Each ten point average roughness of the surface of the coatings obtained in Examples 1 to 13 and Comparative Examples 1 to 4 was measured by a surface texture and contour measuring instruments (manufactured by Tokyo Seimitsu Co., Ltd.).
The results are shown in Table 1.

(4) Vickers hardness

Each Vickers hardness of the surface of the coatings obtained in Examples 1 to 13 and Comparative Examples 1 to 4 was measured by a microhardness tester (manufactured by Akashi Corporation) by applying a load of 25 g.
The results are shown in Table 1. The hardness could not be measured in Comparative Examples 3 and 4 because the coatings were destroyed in the measurement.

(5) Nanoindentation

The coatings obtained in Examples 1 to 13 and Comparative Examples 1 to 4 were subjected to nanoindentation by a micro surface material property evaluation system (manufactured by Akashi Corporation), and the indentation depth was plotted in relation to the load, and maximum indentation depth and degree of plastic deformation were determined from this curve to evaluate ductility. The nanoindentation was performed under the conditions of the test load of 10 g, indentation speed of 10 $\mu$m/s, retention time of 1 second, and unloading time of 10 seconds.
The results are shown in Table 1. Since no drastic change in the slope was found in the load curve of the indentation depth vs load in all coatings, it was estimated that the coating was not destroyed.

(6) Friction wear test

Friction wear test was conducted for the coatings obtained in Examples 1 to 13 and Comparative Examples 1 to 4 by using a reciprocal sliding surface property tester (manufactured by Shinto Scientific Co., Ltd.) to measure coefficient of friction and worn area of the counterpart member. In the friction wear test, a ball of SUJ2 steel having a diameter of 10 mm was used for the counterpart member. The friction wear test was conducted by using no lubricant under the load of 200 g, slide speed of 1500 mm/min, and number of reciprocal sliding of 100. The coating after the friction wear test was visually inspected to evaluate wear resistance of the coating.
The results are shown in Table 1. In Table 1, the sample exhibiting no wear in the coating was evaluated "pass", and the sample with worn coating was evaluated "fail".
In Comparative Example 2, initial coefficient of friction was 0.20 to 0.25. However, the coefficient of friction increased to the level of 0.30 to 0.35 when the number of reciprocal sliding reached 80 to 100. At this stage, the aluminum matrix became exposed along the sliding track of the coating, indicating the wear of the coating (see FIG. 4, which is an optical micrograph at a magnification of 100 of the coating obtained in Comparative Example 2 along the sliding track after the friction wear test). This indicates that the increase in the coefficient of friction is caused by the cohesion of metals by the contact of the aluminum with the ball of SUJ2 steel.
In Comparative Example 3, the initial coefficient of friction was 0.25 to 0.30. However, the coefficient of friction increased to the level of 0.50 to 0.60 when the number of reciprocal sliding exceeded 50. At this stage, the aluminum matrix became exposed along the sliding track of the coating, indicating the wear of the coating.
In Comparative Example 4, the initial coefficient of friction was 0.20 to 0.25. However, the coefficient of friction increased to the level of 0.80 to 0.90 when the number of reciprocal sliding exceeded 10. At this stage, the aluminum matrix became exposed along the sliding track of the coating, indicating the wear of the coating. The worn area of the counterpart member could not be measured because the aluminum adhered to the top part of the ball.

(7) X ray diffraction

The coatings obtained in Example 1 and Comparative Example 1 were evaluated by X ray diffractometry. The X ray diffractometry was conducted by thin film method on a X ray diffractometer (manufactured by Philips).
The results are shown in FIG. 5. FIG. 5(A) is a graph showing the X ray diffraction pattern for the coating obtained in Example 1, and FIG. 5(B) is a graph showing the X ray diffraction pattern for the coating obtained in Comparative Example 1.
FIG. 5(A) indicates that the coating formed in Example 1 contained tetragonal zirconium oxide, rhombohedral aluminum oxide, and zirconium potassium phosphate. FIG. 5(B) indicates that the coating obtained in Comparative Example 1 contained rhombohedral aluminum oxide as its main component.

Table 1

| | Electrolyte composition | | | Voltage | | | Evaluation | | | | | | | |
|---|---|---|---|---|---|---|---|---|---|---|---|---|---|---|
| | Zr or Si | P or O | Alkali (mol/L) | Wave-form | Max. (V) | Min. (V) | Coating thickness (μm) | Ten point average roughness (μm) | Hardness (Hv) | Ductility | | Coefficient of friction | Wear Resistance | Wear area of counter-part material (mm²) |
| | | | | | | | | | | Max. indentation depth (μm) | Plastic deformation (μm) | | | |
| Ex. 1 | Zr-1 | P | 0.036 (KOH) | DC + sin | 720 | -120 | 30 | 24 | >1500 | 1.07 | 0.64 | 0.15 - 0.20 | Pass | 1.6 |
| Ex. 2 | Zr-1 | - | 0.036 (KOH) | DC + sin | 720 | -120 | 35 | 45 | >1500 | 0.99 | 0.55 | 0.30 - 0.35 | Pass | 2.3 |
| Ex. 3 | Zr-1 | P | 0.036 (KOH) | DC + sin | 720 | -120 | 32 | 27 | >1500 | 1.02 | 0.61 | 0.175 - 0.225 | Pass | 1.7 |
| Ex. 4 (*) | Zr-2 | P | 0.036 (KOH) | DC + sin | 720 | -120 | 30 | 21 | >1500 | 0.68 | 0.27 | 0.20 - 0.25 | Pass | 2.1 |
| Ex. 5 (*) | Zr-3 | O | 0.036 (KOH) | DC + sin | 720 | -120 | 15 | 8.5 | >1500 | 0.67 | 0.23 | 0.20 - 0.25 | Pass | 1.0 |
| Ex. 6 (*) | Zr-3 | O | 0.036 (KOH) | DC + sin | 720 | -120 | 20 | 11 | >1500 | 0.75 | 0.33 | 0.20 - 0.25 | Pass | 1.2 |
| Ex. 7 | Zr-1 | P | 0.036 (KOH) | DC + sin | 600 | -100 | 15 | 11 | >1500 | 0.61 | 0.22 | 0.175 - 0.225 | Pass | 1.7 |
| Ex. 8 | Zr-1 | P | 0.036 (KOH) | DC + pulse | 720 | -120 | 13 | 7.7 | >1500 | 0.72 | 0.44 | 0.15 - 0.20 | Pass | 1.0 |
| Ex. 9 | Zr-1 | P | 0.025 (NaOH) | DC + sin | 720 | -120 | 15 | 7.0 | >1500 | 0.75 | 0.41 | 0.15 - 0.20 | Pass | 1.3 |
| Ex. 10 (*) | Zr-4 | P | 0.130 (NaOH) | DC + sin | 720 | -120 | 21 | 12 | 800 - 1200 | 0.93 | 0.50 | 0.15 - 0.20 | Pass | 1.2 |
| Ex. 11 (*) | Zr-3 | P | 0.150 (KOH) | DC + sin | 600 | -100 | 25 | 8.0 | 800 - 1200 | 0.96 | 0.51 | 0.20 - 0.25 | Pass | 1.1 |
| Ex. 12 | Zr-1 | P | 0.010 (TMAH) | DC + sin | 600 | -100 | 22 | 15 | 800 - 1200 | 0.85 | 0.42 | 0.20 - 0.25 | Pass | 0.9 |

17

(continued)

| | Electrolyte composition | | | Voltage | | | Evaluation | | | | | | | |
|---|---|---|---|---|---|---|---|---|---|---|---|---|---|---|
| | | | | | | | | | | Ductility | | | | |
| | Zr or Si | P or O | Alkali (mol/L) | Wave-form | Max. (V) | Min. (V) | Coating thickness (μm) | Ten point average roughness (μm) | Hardness (Hv) | Max. indentation depth (μm) | Plastic deformation (μm) | Coefficient of friction | Wear Resistance | Wear area of counter-part material (mm²) |
| Ex. 13 | Zr-1 | P | 0.100 (KOH) | DC + sin | 600 | -100 | 18 | 13 | 800 - 1200 | 0.80 | 0.39 | 0.20 - 0.25 | Pass | 1.1 |
| Comp. Ex. 1 | Si-1 | P | 0.036 (KOH) | DC + sin | 720 | -120 | 35 | 32 | >1500 | 0.57 | 0.18 | 0.275 - 0.325 | Pass | 2.7 |
| Comp. Ex. 2 | Si-1 | P | 0.036 (KOH) | DC + pulse | 720 | -120 | 12 | 8.2 | >1500 | 0.54 | 0.17 | 0.30 - 0.35 | Fail | 1.0 |
| Comp. Ex. 3 | - | P | 0.036 (KOH) | DC + sin | 720 | -120 | 19 | 9.8 | - | 0.54 | 0.15 | 0.50 - 0.60 | Fail | 1.3 |
| Comp. Ex. 4 | - | P | 0.036 (KOH) | DC + sin | 340 | 60 | 1.8 | 6.6 | - | 2.06 | 1.91 | 0.80 - 0.90 | Fail | - |
| (*) Examples 4-6, 10 and 11 are not according to the invention | | | | | | | | | | | | | | |

EP 1 818 428 B1

The abbreviations used in Table 1 are as described below.

Zr-1: zirconium potassium carbonate (water soluble), 0.01 mol/L
Zr-2: zirconium hydroxide (poorly soluble particles having a particle size of about 0.1 $\mu$m), 0.01 mol/L
Zr-3: zirconium acetate (water soluble), 0.01 mol/L
Zr-4: stabilized zirconia (poorly soluble particles having a particle size of about 0.3 $\mu$m), 0.05 mol/L
Si-1: sodium metasilicate nonahydrate, 0.01 mol/L
P: sodium pyrophosphate, 0.015 mol/L
O: sodium citrate dihydrate, 0.01 mol/L
DC + sin: voltage waveform comprising a direct current superposed with a sine wave
DC + pulse: voltage waveform comprising a direct current superposed with a pulse wave

As demonstrated in Table 1, the coatings of Examples 1 to 13 obtained by the electrolytic treatment using the electrolyte for electrolytic deposition of a ceramic coating on a metal exhibited high hardness, excellent wear resistance, and reduced attack on the counterpart member. Examples 4 to 6, 10 and 11 are not according to the invention.

In contrast, when an electrolyte containing a silicon compound was used instead of the electrolyte containing a zirconium compound, the resulting article exhibited increased attack to the counterpart member (Comparative Example 1) or low wear resistance (Comparative Example 2). When an electrolyte containing neither the zirconium compound nor the silicon compound was used, the resulting article had inferior hardness at both high voltage (Comparative Example 3) and low voltage (Comparative Example 4).

<B. Examples of the metal member of the present invention>

1. Electrolytic treatment

(Example 14)

Electrolytic treatment was conducted for 10 minutes by bipolar electrolysis using an aluminum plate (a plate of JIS 1000) having a surface area of 0.12 dm$^2$ for the anode and a stainless steel plate for the cathode to thereby produce a metal member having a coating deposited on the aluminum plate. When the anode surface was observed during the electrolytic treatment, light emission by spark discharge and glow discharge was recognized.

The electrolyte used was an electrolyte (pH 11.2) prepared by adding 0.01 mol/L of zirconium potassium carbonate, 0.005 mol/L of sodium pyrophosphate, and 0.025 mol/L of potassium hydroxide to water.

The voltage waveform used was the one having a frequency of 60 Hz comprising an AC component at 300 V superposed with a DC component having an effective value of 300 V. The voltage used had a maximum value of about 720 V and a minimum value of about -120 V. The current density had a positive peak of about 125 A/dm$^2$ and a negative peak of about 60 A/dm$^2$.

(Example 15)

The electrolytic treatment was conducted by repeating the procedure of Example 14 except that the electrolyte used was the one having a pH of 10.8 prepared by adding 0.015 mol/L of zirconium acetate, 0.02 mol/L of sodium citrate dihydrate, and 0.020 mol/L of potassium hydroxide to water to thereby produce a metal member having a coating deposited on the aluminum plate. When the anode surface was observed during the electrolytic treatment, light emission by spark discharge and glow discharge was recognized.

(Example 16)

The electrolytic treatment was conducted by repeating the procedure of Example 14 except that the electrolytic treatment was conducted by pulse electrolysis using a voltage waveform comprising a DC component at 300 V superposed with a pulse wave having an amplitude of 420 V to thereby produce a metal member having a coating deposited on the aluminum plate. The voltage values were the same as those of Example 14, with the maximum value of about 720 V and the minimum value of about -120 V. When the anode surface was observed during the electrolytic treatment, light emission by spark discharge and glow discharge was recognized.

(Example 17)

Electrolytic treatment was conducted for 5 minutes by an anode electrolysis using an aluminum alloy plate (a plate of JIS 6000) having a surface area of 0.5 dm$^2$ for the anode and a stainless steel plate for the cathode to thereby produce a metal member having a coating deposited on the aluminum alloy plate. When the anode surface was observed during the electrolytic treatment, light emission by spark discharge and glow discharge was recognized.

The electrolyte used was an electrolyte (pH 10.0) prepared by adding 0.05 mol/L of zirconium potassium carbonate, and 0.05 mol/L of sodium pyrophosphate to water.

The voltage waveform used was a sine wave having a frequency 60 Hz which had been subjected to half-wave rectification. The voltage used had a maximum value of about 500 V. The current density had a positive peak of about 70 A/dm$^2$.

(Example 18)

The electrolytic treatment was conducted by repeating the procedure of Example 17 except that an aluminum die cast alloy plate (a plate of JIS ADC12) having a surface area of 0.52 dm$^2$ was used for the anode with the stainless steel plate used for the cathode, and the electrolytic treatment was conducted by anode electrolysis for 15 minutes to thereby produce a metal member having a coating deposited on the aluminum die cast plate. When the anode surface was observed during the electrolytic treatment, light emission by spark discharge and glow discharge was recognized.

(Example 19)

The electrolytic treatment was conducted by repeating the procedure of Example 17 except that a titanium alloy plate (a plate of JIS 60, i.e., the so called 6-4 alloy plate) having a surface area of 0.48 dm$^2$ was used for the anode with the cathode stainless steel plate used for the cathode, and the electrolytic treatment was conducted by anode electrolysis for 5 minutes to thereby produce a metal member having a coating deposited on the titanium alloy plate. When the anode surface was observed during the electrolytic treatment, no light emission by either spark discharge or glow discharge was recognized.

(Example 20)

The electrolytic treatment was conducted by repeating the procedure of Example 19 except that the electrolytic treatment was conducted for 20 minutes to thereby produce a metal member having a coating deposited on the titanium alloy plate. When the anode surface was observed during the electrolytic treatment, light emission by spark discharge and glow discharge was recognized.

(Example 21)

Electrolytic treatment was conducted for 10 minutes by anode electrolysis using an aluminum alloy plate (a plate of JIS 1000) having a surface area of 0.35 dm$^2$ for the anode and a stainless steel plate for the cathode to thereby produce a metal member having a coating deposited on the aluminum alloy plate. When the anode surface was observed during the electrolytic treatment, light emission by spark discharge and glow discharge was recognized.

The electrolyte used was an electrolyte (pH 9.5) prepared by adding 0.18 mol/L of zirconium potassium carbonate, 0.015 mol/L of sodium pyrophosphate, and 0.036 mol/L of potassium hydroxide to water.

The voltage waveform used was a sine wave having a frequency 60 Hz which had been subjected to half-wave rectification. The voltage used had a maximum value of about 600 V. The current density had a positive peak of about 120 A/dm$^2$.

(Example 22)

Electrolytic treatment was conducted for 10 minutes by anode electrolysis using a magnesium alloy plate (a plate of JIS AZ91D) having a surface area of 0.4 dm$^2$ for the anode and a stainless steel plate for the cathode to thereby produce a metal member having a coating deposited on the magnesium alloy plate. When the anode surface was observed during the electrolytic treatment, light emission by spark discharge and glow discharge was recognized.

The electrolyte used was an electrolyte (pH 13.0) prepared by adding 0.01 mol/L of zirconium potassium carbonate, 0.015 mol/L of sodium pyrophosphate, and 0.130 mol/L of potassium hydroxide to water.

The voltage waveform used was a sine wave having a frequency 60 Hz which had been subjected to half-wave rectification. The voltage used had a maximum value of about 500 V. The current density had a positive peak of about 100 A/dm$^2$.

(Comparative Example 5)

The electrolytic treatment was conducted by repeating the procedure of Example 14 except that the electrolyte used was the one having a pH of 12.8 prepared by adding 0.013 mol/L of sodium metasilicate nonahydrate, 0.010 mol/L of sodium pyrophosphate, and 0.036 mol/L of potassium hydroxide to water to thereby produce a metal member having a coating deposited on the aluminum plate. When the anode surface was observed during the electrolytic treatment, light emission by spark discharge and glow discharge was recognized.

(Comparative Example 6)

The electrolytic treatment was conducted by repeating the procedure of Example 16 except that the electrolyte used was the one having a pH of 12.8 prepared by adding 0.013 mol/L of sodium metasilicate nonahydrate, 0.010 mol/L of sodium pyrophosphate, and 0.036 mol/L of potassium hydroxide to water to thereby produce a metal member having a coating deposited on the aluminum plate. When the anode surface was observed during the electrolytic treatment, light emission by spark discharge and glow discharge was recognized.

(Comparative Example 7)

The electrolytic treatment was conducted by repeating the procedure of Example 14 except that the electrolyte used was the one having a pH of 13.0 prepared by adding 0.015 mol/L of sodium pyrophosphate and 0.030 mol/L of potassium hydroxide to water to thereby produce a metal member having a coating deposited on the aluminum plate. When the anode surface was observed during the electrolytic treatment, light emission by spark discharge and glow discharge was recognized.

2. Test Sample

(Comparative Example 8)

A commercially available metal member which is made of an aluminum alloy (JIS 6000) having a hard anodized aluminum coating deposited thereon was used for the test sample of Comparative Example 4.

(Comparative Example 9)

A commercially available metal member which is an aluminum die cast alloy plate (a plate of JIS ADC12) having a hard anodized aluminum coating deposited thereon was used for the test sample of Comparative Example 5.

3. Evaluation of the coating

The metal members produced in Examples 14 to 22 and Comparative Examples 5 to 9 were evaluated for the following items.

(1) Observation of the cross-section of the coating deposited on the metal member

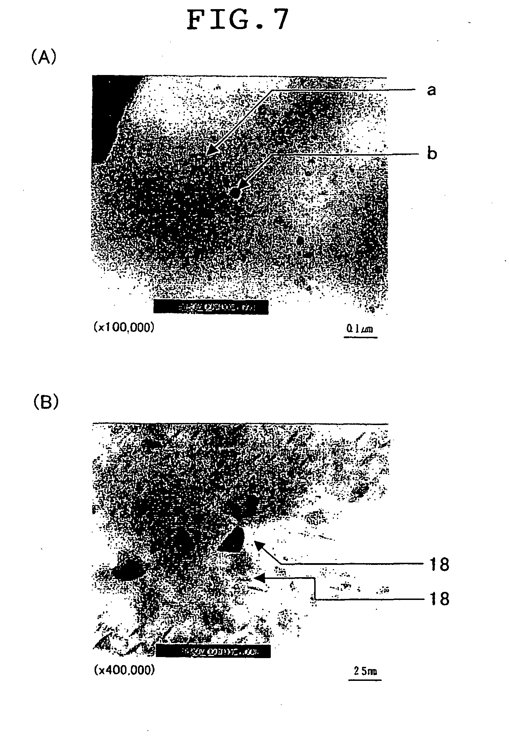

A thin slice of the metal member produced in Example 14 was prepared. The cross-section of the coating that became exposed was observed under a field emission transmission electron microscope (manufactured by Hitachi, Ltd.).
The results are shown in FIG. 7. FIG. 7(A) is a micrograph of the amorphous layer in the coating of the metal member produced in Example 14, and FIG. 7(B) is a micrograph of the crystalline layer in the coating of the metal member produced in Example 14.
As demonstrated in FIG. 7(A), zirconium oxide microcrystals are dispersed in the amorphous oxide in the amorphous layer, and as demonstrated in FIG. 7(B), zirconium oxide microcrystals are dispersed in the crystalline oxide in the crystalline layer.
The metal members produced in Examples 15 to 22 were also observed in the similar procedure, and the results were similar for these metal members.

(2) Electron diffraction analysis and energy-dispersive X ray spectroscopic analysis

Electron diffraction analysis was conducted for locations "a" and "b" in the micrograph of the amorphous layer in the coating of the metal member produced in Example 14 shown in FIG. 7(A).

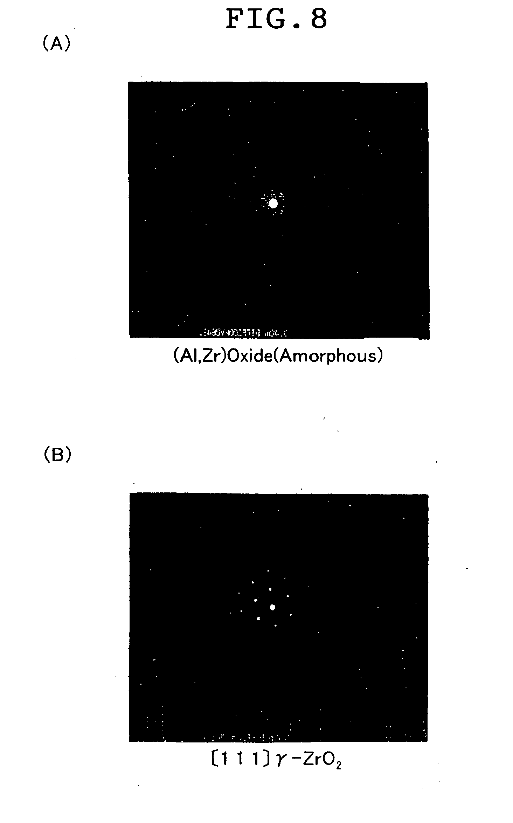

The results are shown in FIG. 8. FIG. 8(A) is the electron diffractogram at the location "a" in FIG. 7(A), and FIG. 8(B) is the electron diffractogram at the location "b" in FIG. 7(A).

Energy-dispersive X ray spectroscopic analysis was conducted for locations "a" and "b" in the same micrograph to identify the substance at these locations. It was then found that the substance at location "a" was an amorphous oxide containing zirconium and aluminum, and the substance at location "b" was cubic zirconium oxide.

(3) Glow discharge optical emission spectroscopic analysis

The coatings obtained in Examples 16 and 18 were evaluated by qualitative analysis in the depth direction by using a glow discharge optical emission spectrometer (manufactured by HORIBA, Ltd.).

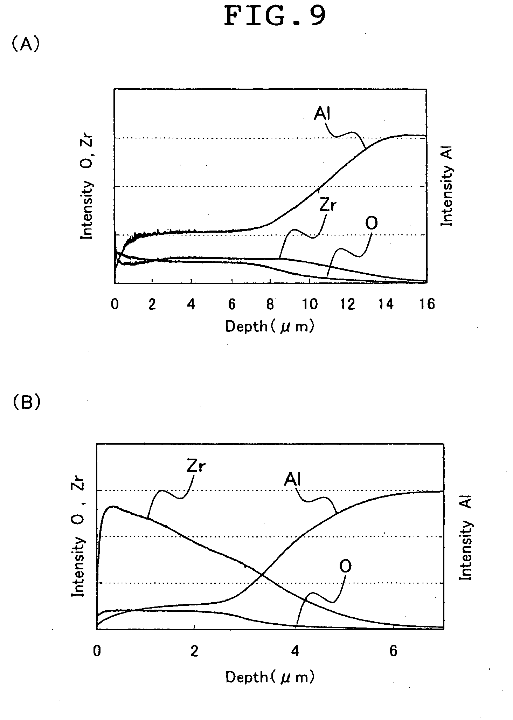

The results are shown in FIG. 9. FIG. 9(A) is the graph showing the result of the qualitative analysis in depth direction obtained by glow discharge optical emission spectroscopy for the coating of the metal member produced in Example 16, and FIG. 9(B) is the graph showing the result of the qualitative analysis in depth direction obtained by glow discharge optical emission spectroscopy for the coating of the metal member produced in Example 18.

As demonstrated in FIGS. 9(A) and 9(B), elemental zirconium exhibited concentration gradient gradually decreasing in the depth direction toward the interface between the coating and the metal substrate.

(4) X ray diffraction

The coatings obtained in Examples 14 to 22 and Comparative Examples 5 to 9 were evaluated by X ray diffractometry. The X ray diffractometry was conducted by thin film method on an X ray diffractometer (manufactured by Philips).

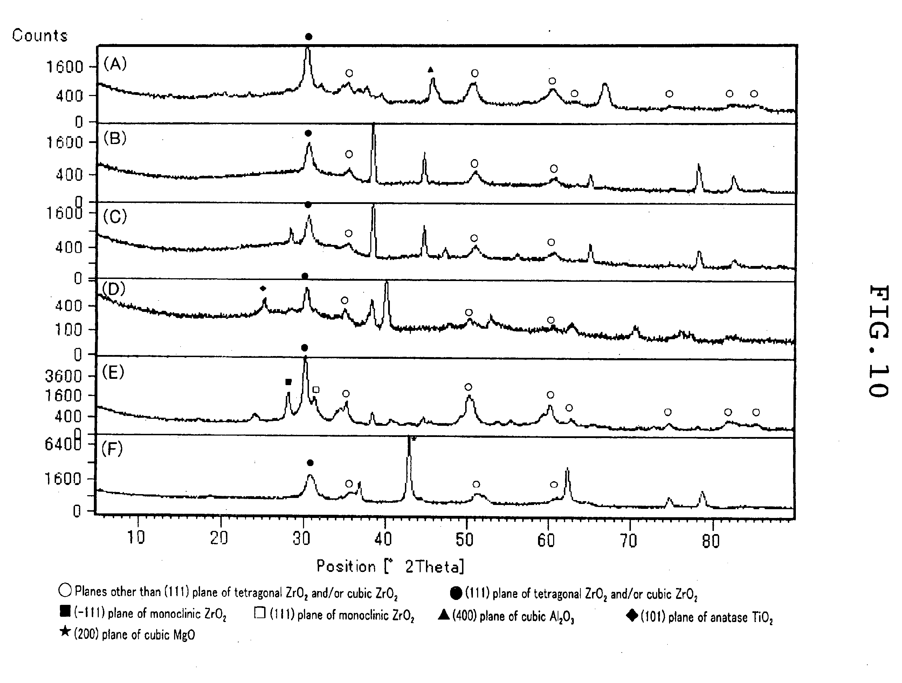

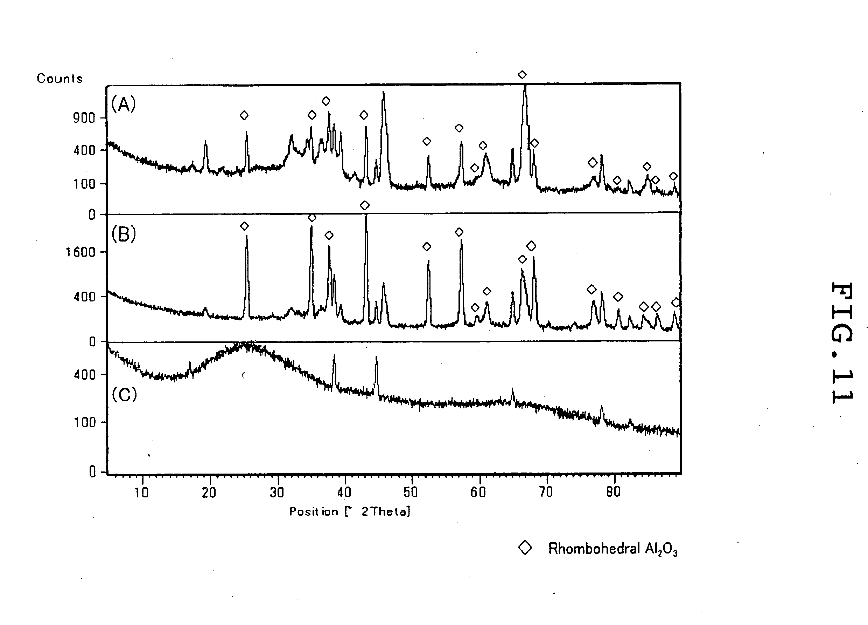

The results are shown in FIGS. 10 and 11 and Table 2. FIGS. 10(A), 10(B), 10(C), 10(D), 10(E), and 10(F) are respectively graphs showing the X ray diffraction pattern for the coatings of the metal members obtained in Examples 14, 17, 18, 19, 21, and 22, and FIGS. 11(A), 11(B), and 11(C) are respectively graphs showing the X ray diffraction pattern for the coatings of the metal members obtained in Comparative Examples 5, 7, and 8.

As demonstrated in FIGS. 10(A) to 10(F), all of the coatings formed in Examples 14, 17, 18, 19, 21, and 22 contained cubic zirconium oxide and/or tetragonal zirconium oxide.

In addition, FIG. 10(A) reveals that, in the X ray diffraction pattern of the coating of the Example 14, relative peak intensity of (111) plane of tetragonal zirconium oxide and/or cubic zirconium oxide is higher than relative peak intensity of the main peak of the alumina. FIG. 10(D) reveals that, in the X ray diffraction pattern of the coating of Example 19, relative peak intensity of (111) plane of tetragonal zirconium oxide and/or cubic zirconium oxide is higher than relative peak intensity of the main peak of the titanium oxide.

Furthermore, FIG. 10(E) reveals that monoclinic zirconium oxide is present in the coating of Example 21, and that proportion ($V_m$) of volume of the monoclinic zirconium oxide in relation to the total of the volume of the tetragonal zirconium oxide and/or the cubic zirconium oxide and the volume of the monoclinic zirconium oxide is 0.3 to 0.4.

For Examples 14 to 22, each proportion ($V_m$) of the volume of the monoclinic zirconium oxide in relation to the total of the volume of the tetragonal zirconium oxide and/or the cubic zirconium oxide and the volume of the monoclinic zirconium oxide calculated from the X ray diffraction pattern by the equation (1) is shown in Table 2.

As demonstrated in FIGS. 11(A) and 11(B), all of the coatings formed in Comparative Examples 5 and 7 contain rhombohedral alumina. As evident from FIG. 11(C), in the case of the coating formed in Comparative Example 8, peaks other than the peak of the metal element constituting the metal substrate were not recognized.

(5) Thickness of the coating

The coatings produced in Examples 14 to 22 and Comparative Examples 5 to 9 were measured for their thickness by eddy current coating thickness tester (manufactured by Kett Electric Laboratory).

The results are shown in Table 2.

(6) Centerline average roughness

The surface of the coatings produced in Examples 14 to 22 and Comparative Examples 5 to 9 were measured for the center line average roughness by a surface texture and contour measuring instruments (manufactured by Tokyo Seimitsu Co., Ltd.).

The results are shown in Table 2.

(7) Vickers hardness

Each Vickers hardness of the surface of the coatings obtained in Examples 14 to 22 and Comparative Examples 5 to 9 was measured by a microhardness tester (manufactured by Akashi Corporation) by applying a load of 10 g.

The results are shown in Table 2. The hardness could not be measured in Comparative Examples 4 and 6 because the coating was destroyed in the measurement.

(8) Friction wear test

Friction wear test was conducted for the coatings obtained in Examples 14 to 22 and Comparative Examples 5 to 9 using a reciprocal sliding surface property tester (manufactured by Shinto Scientific Co., Ltd.) to measure coefficient of friction and worn area of the counterpart member. In the friction wear test, a ball of SUJ2 steel having a diameter of 10 mm was used for the counterpart member. The friction wear test was conducted by using no lubricant under the load of 200 g, slide speed of 1500 mm/min, and number of reciprocal sliding of 500. The coating after the friction wear test was measured for the wear depth by a surface texture and contour measuring instruments.

The results are shown in Table 2.

In Comparative Example 6, initial coefficient of friction was 0.25 to 0.3. However, the coefficient of friction increased to the level of 0.50 to 0.60 when the number of reciprocal sliding reached 400 to 500.

In Comparative Example 7, initial coefficient of friction was 0.30 to 0.35. However, the coefficient of friction increased to the level of 0.50 to 0.60 when the number of reciprocal sliding reached 400 to 500.

In Comparative Example 8, the coefficient of friction increased to the level of 0.80 to 0.90 and the wear depth became 3.0 $\mu$m when the number of reciprocal sliding reached approximately 100.

In Comparative Example 9, the coefficient of friction increased to the level of 0.80 to 0.90 and the wear depth became 2.5 $\mu$m when the number of reciprocal sliding reached approximately 100.

As demonstrated in Table 2, each coating of Examples 14 to 22 had a coefficient of friction smaller than that of Comparative Examples 5 to 9. When the coatings with similar center line average roughness were compared for the wear area of their counterpart member, the coatings of the Examples of the present invention exhibited smaller values compared to those of the Comparative Examples.

[Table 2]

Table 2

| | Electrolyte composition | Coating thickness ($\mu$m) | Center line Average roughness ($\mu$m) | Hardness (Hv) | $V_m$ | Coefficient of friction | Wear area of counterpart member (mm$^2$) | Wear depth of the coating ($\mu$m) |
|---|---|---|---|---|---|---|---|---|
| Ex. 14 | Zr | 30 | 2.10 | >1500 | ≤ 0.1 | 0.20 - 0.25 | 1.60 | 0.0 |
| Ex. 15 | Zr | 20 | 1.23 | >1500 | ≤ 0.1 | 0.20 - 0.25 | 0.95 | 0.0 |
| Ex. 16 | Zr | 14 | 0.98 | >1500 | ≤ 0.1 | 0.20 - 0.25 | 0.83 | 0.0 |
| Ex. 17 | Zr | 4 | 0.54 | - | ≤ 0.1 | 0.15 - 0.20 | 0.19 | 0.0 |
| Ex. 18 | Zr | 6 | 0.60 | 800 - 900 | ≤ 0.1 | 0.15 - 0.20 | 0.14 | 0.0 |
| Ex. 19 | Zr | 3 | 0.30 | - | ≤ 0.1 | 0.25 - 0.30 | 0.15 | 0.0 |
| Ex. 20 | Zr | 27 | 2.06 | 500 - 700 | 0.4 - 0.5 | 0.20 - 0.25 | 0.28 | 0.0 |

(continued)

| | Electrolyte composition | Coating thickness (μm) | Center line Average roughness (μm) | Hardness (Hv) | $V_m$ | Coefficient of friction | Wear area of counterpart member (mm$^2$) | Wear depth of the coating (μm) |
|---|---|---|---|---|---|---|---|---|
| Ex. 21 | Zr | 17 | 1.40 | 800 - 1000 | 0.3 - 0.4 | 0.25 - 0.30 | 1.10 | 0.0 |
| Ex. 22 | Zr | 15 | 1.10 | 800 - 1000 | ≤ 0.1 | 0.20 - 0.25 | 0.45 | 0.0 |
| Comp. Ex. 5 | Si | 35 | 4.50 | >1500 | - | 0.30 - 0.40 | 3.57 | 0.0 |
| Comp. Ex. 6 | Si | 12 | 1.19 | >1500 | - | 0.50 - 0.60 | 2.03 | 0.0 |
| Comp. Ex. 7 | - | 11 | 1.33 | >1500 | - | 0.50 - 0.60 | 2.15 | 0.0 |
| Comp. Ex. 8 | - | 10 | 1.22 | 300 - 500 | - | 0.80 - 0.90 | 0.69 | 3.0 |
| Comp. Ex. 9 | - | 9 | 0.74 | 300 - 400 | - | 0.80 - 0.90 | 0.45 | 2.5 |

As demonstrated in Table 2, the metal members of the present invention (Examples 14 to 22) have excellent wear resistance and sliding properties.

**Claims**

1.   A method for electrolytically depositing a ceramic coating on a metal wherein an electrolytic treatment is conducted by using the metal as an anode in an electrolyte of a pH of at least 8 containing a water soluble zirconium carbonate compound selected from the group consisting of a zirconium ammonium carbonate and a zirconium potassium carbonate to thereby form a ceramic coating on a surface of the metal.

2.   The method for electrolytically depositing a ceramic coating on a metal according to claim 1, wherein the electrolyte further contains a water soluble phosphorus compound.

3.   The method for electrolytically depositing a ceramic coating on a metal according to claim 2, wherein the water soluble phosphorus compound is a condensed phosphate.

4.   The method for electrolytically depositing a ceramic coating on a metal according to any one of claims 1 to 3 wherein the electrolyte further contains an ion and/or an oxide of at least one metal selected from the group consisting of titanium, yttrium, calcium, magnesium, scandium, and cerium.

5.   The method for electrolytically depositing a ceramic coating on a metal according to any one of claims 1 to 4 wherein the electrolyte further contains poorly soluble particles of at least one member selected from the group consisting of oxide, hydroxide, phosphate, and carbonate.

6.   The method for electrolytically depositing a ceramic coating on a metal according to any one of claims 1 to 5 wherein the electrolytic treatment is carried out by a direct current electrolysis or a bipolar electrolysis using a voltage waveform in which an AC component is superposed on a DC component.

7.   The method for electrolytically depositing a ceramic coating on a metal according to any one of claims 1 to 6 wherein the electrolytic treatment is conducted by using a voltage waveform in which at least one pulse wave selected from the group consisting of rectangular wave, sine wave, and triangular wave having a duty ratio of up to 0.5 is superposed on a DC or AC component.

8. The method for electrolytically depositing a ceramic coating on a metal according to claim 6 or 7 wherein the maximum value of the voltage waveform is at least 400 V.

9. The method for electrolytically depositing a ceramic coating on a metal according to any one of claims 1 to 8 wherein the electrolytic treatment is conducted under glow discharge and/or arc discharge caused on the surface of the metal used as the anode.

10. The method for electrolytically depositing a ceramic coating on a metal according to any one of claims 1 to 9 wherein the metal is selected from the group consisting of aluminum, titanium, niobium, magnesium, tantalum and the alloy thereof.

11. An electrolyte for use in electrolytic deposition of a ceramic coating on a metal, containing water, a water soluble zirconium carbonate compound selected from the group consisting of a zirconium ammonium carbonate and a zirconium potassium carbonate, and at least one member selected from the group consisting of alkali metal ion, ammonium ion, and organic alkali at a pH of at least 8.0.

12. The electrolyte for use in electrolytic deposition of a ceramic coating on a metal according to claim 11 wherein the electrolyte further contains a water soluble phosphorus compound.

13. The electrolyte for use in electrolytic deposition of a ceramic coating on a metal according to claim 12 wherein the water soluble phosphorus compound is a condensed phosphate.

14. The electrolyte for use in electrolytic deposition of a ceramic coating on a metal according to any one of claims 11 to 13 wherein the electrolyte further contains an ion and/or an oxide of at least one metal selected from the group consisting of titanium, yttrium, calcium, magnesium, scandium, and cerium.

15. The electrolyte for use in electrolytic deposition of a ceramic coating on a metal according to any one of claims 11 to 14 wherein the electrolyte further contains poorly soluble particles of at least one member selected from the group consisting of oxide, hydroxide, phosphate, and carbonate.

16. The electrolyte for use in electrolytic deposition of a ceramic coating on a metal according to any one of claims 11 to 15 wherein the electrolyte is used for electrolytically depositing a ceramic coating on a metal selected from the group consisting of aluminum, titanium, niobium, magnesium, tantalum and the alloy thereof.

17. A metal member comprising a metal substrate and a hard coating on the metal substrate, wherein:

(i) the hard coating comprises an amorphous layer which is composed of an amorphous oxide containing a metal element constituting the metal substrate and zirconium, and zirconium oxide microcrystals dispersed in the amorphous oxide; or
(ii) the hard coating comprises a crystalline layer on the metal substrate and an amorphous layer on the crystalline layer, with the crystalline layer containing crystals of oxide of a metal element constituting the metal substrate, and the amorphous layer being composed of an amorphous oxide containing the metal element constituting the metal substrate and zirconium, and zirconium oxide microcrystals dispersed in the amorphous oxide;

wherein the zirconium oxide microcrystals in the hard coating are selected from the group consisting of tetragonal crystals and cubic crystals;
and the concentration distribution of the zirconium in the hard coating is such that the zirconium concentration gradually reduces from the surface of the hard coating toward the metal substrate.

18. The metal member according to claim 17 (ii) wherein the crystalline layer further contains zirconium oxide microcrystals dispersed along a grain boundary and/or in a grain of the crystals of oxide of the metal element constituting the metal substrate.

19. The metal member according to any one of claims 17 and 18 wherein, when the hard coating is analyzed by X ray diffractometry, relative peak intensity on (111) plane of tetragonal zirconium oxide and/or cubic zirconium oxide is equal to or higher than relative peak intensity of the main peak of the oxide of the metal element constituting the metal substrate.

20. The metal member according to any one of claims 17 to 19 wherein, when the hard coating is analyzed by X ray diffractometry, proportion of volume of monoclinic zirconium oxide to the total of volume of the tetragonal zirconium oxide and/or the cubic zirconium oxide and volume of the monoclinic zirconium oxide is up to 0.5.

21. The metal member according to any one of claims 17 to 20 wherein microcrystals of the tetragonal zirconium oxide and/or the cubic zirconium oxide have an average grain diameter of 0.25 to 500 nm.

22. The metal member according to any one of claims 17 to 21 wherein a phosphorus oxide is present on a surface selected from the group consisting of a surface of the hard coating and an interface of the hard coating with the metal substrate.

23. The metal member according to any one of claims 17 to 22 wherein the hard coating further contains at least one element selected from the group consisting of yttrium, calcium, cerium, scandium, magnesium, and titanium.

24. The metal member according to any one of claims 17 to 23 wherein the metal element constituting the metal substrate is a metal selected from the group consisting of aluminum, titanium, niobium, magnesium, tantalum and the alloy thereof.

25. The metal member according to any one of claims 17 to 24 produced by the method for electrolytically depositing a ceramic coating on a metal according to any one of claims 1 to 10.

**Patentansprüche**

1. Verfahren zur elektrolytischen Abscheidung einer Keramikbeschichtung auf einem Metall, wobei eine elektrolytische Behandlung durchgeführt wird, indem das Metall als Anode in einem Elektrolyt mit einen pH von wenigstens 8 verwendet wird, der eine wasserlösliche Zirconiumcarbonatverbindung, ausgewählt aus der Gruppe, bestehend aus einem Zirconiumammoniumcarbonat und einem Zirconiumkaliumcarbonat, enthält, um dadurch eine Keramikbeschichtung auf einer Oberfläche des Metalls zu bilden.

2. Verfahren zur elektrolytischen Abscheidung einer Keramikbeschichtung auf einem Metall gemäß Anspruch 1, wobei der Elektrolyt außerdem eine wasserlösliche Phosphorverbindung enthält.

3. Verfahren zur elektrolytischen Abscheidung einer Keramikbeschichtung auf einem Metall gemäß Anspruch 2, wobei die wasserlösliche Phosphorverbindung ein kondensiertes Phosphat ist.

4. Verfahren zur elektrolytischen Abscheidung einer Keramikbeschichtung auf einem Metall gemäß einem der Ansprüche 1 bis 3, wobei der Elektrolyt außerdem ein Ion und/oder ein Oxid wenigstens eines Metalls, ausgewählt aus der Gruppe, bestehend aus Titan, Yttrium, Calcium, Magnesium, Scandium und Cer, enthält.

5. Verfahren zur elektrolytischen Abscheidung einer Keramikbeschichtung auf einem Metall gemäß einem der Ansprüche 1 bis 4, wobei der Elektrolyt außerdem schlecht lösliche Partikel wenigstens eines Mitglieds, ausgewählt aus der Gruppe, bestehend aus Oxid, Hydroxid, Phosphat und Carbonat, enthält.

6. Verfahren zur elektrolytischen Abscheidung einer Keramikbeschichtung auf einem Metall gemäß einem der Ansprüche 1 bis 5, wobei die elektrolytische Behandlung durch eine Gleichstromelektrolyse oder eine bipolare Elektrolyse unter Verwendung einer Spannungswellenform, bei der eine Wechselstromkompomente eine Gleichstromkomponente überlagert, durchgeführt wird.

7. Verfahren zur elektrolytischen Abscheidung einer Keramikbeschichtung auf einem Metall gemäß einem der Ansprüche 1 bis 6, wobei die elektrolytische Behandlung durch Verwendung einer Spannungswellenform durchgeführt wird, bei der wenigstens eine Impulswelle, ausgewählt aus der Gruppe, bestehend aus einer Rechteckwelle, Sinuswelle und Dreieckwelle, mit einer relativen Einschaltdauer von bis zu 0,5 eine Gleichstrom- oder Wechselstromkomponente überlagert.

8. Verfahren zur elektrolytischen Abscheidung einer Keramikbeschichtung auf einem Metall gemäß Anspruch 6 oder 7, wobei der Maximumwert der Spannungswellenform wenigstens 400 V ist.

9. Verfahren zur elektrolytischen Abscheidung einer Keramikbeschichtung auf einem Metall gemäß einem der Ansprüche 1 bis 8, wobei die elektrolytische Behandlung unter Glimmentladung und/oder Bogenentladung, die an der Oberfläche des Metalls, das als die Anode verwendet wird, verursacht wird, durchgeführt wird.

10. Verfahren zur elektrolytischen Abscheidung einer Keramikbeschichtung auf einem Metall gemäß einem der Ansprüche 1 bis 9, wobei das Metall aus der Gruppe, bestehend aus Aluminium, Titan, Niob, Magnesium, Tantal und der Legierung davon, ausgewählt wird.

11. Elektrolyt zur Verwendung bei der elektrolytischen Abscheidung einer Keramikbeschichtung auf einem Metall, enthaltend Wasser, eine wasserlösliche Zirconiumcarbonatverbindung, ausgewählt aus der Gruppe, bestehend aus einem Zirconiumammoniumcarbonat und einem Zirconiumkaliumcarbonat, und wenigstens ein Mitglied, ausgewählt aus der Gruppe, bestehend aus Alkalimetallion, Ammoniumion und organischem Alkali, mit einem pH von wenigstens 8,0.

12. Elektrolyt zur Verwendung bei der elektrolytischen Abscheidung einer Keramikbeschichtung auf einem Metall gemäß Anspruch 11, wobei der Elektrolyt außerdem eine wasserlösliche Phosphorverbindung enthält.

13. Elektrolyt zur Verwendung bei der elektrolytischen Abscheidung einer Keramikbeschichtung auf einem Metall gemäß Anspruch 12, wobei die wasserlösliche Phosphorverbindung ein kondensiertes Phosphat ist.

14. Elektrolyt zur Verwendung bei der elektrolytischen Abscheidung einer Keramikbeschichtung auf einem Metall gemäß einem der Ansprüche 11 bis 13, wobei der Elektrolyt außerdem ein Ion und/oder ein Oxid wenigstens eines Metalls, ausgewählt aus der Gruppe, bestehend aus Titan, Yttrium, Calcium, Magnesium, Scandium und Cer, enthält.

15. Elektrolyt zur Verwendung bei der elektrolytischen Abscheidung einer Keramikbeschichtung auf einem Metall gemäß einem der Ansprüche 11 bis 14, wobei der Elektrolyt außerdem schlecht lösliche Partikel wenigstens eines Mitglieds, ausgewählt aus der Gruppe, bestehend aus Oxid, Hydroxid, Phosphat und Carbonat, enthält.

16. Elektrolyt zur Verwendung bei der elektrolytischen Abscheidung einer Keramikbeschichtung auf einem Metall gemäß einem der Ansprüche 11 bis 15, wobei der Elektrolyt zur elektrolytischen Abscheidung einer Keramikbeschichtung auf einem Metall, ausgewählt aus der Gruppe, bestehend aus Aluminium, Titan, Niob, Magnesium, Tantal und der Legierung davon, verwendet wird.

17. Metallbauteil, umfassend ein Metallsubstrat und eine harte Beschichtung auf dem Metallsubstrat, wobei:

(i) die harte Beschichtung eine amorphe Schicht, die aus einem amorphen Oxid, das ein Metallelement, welches das Metallsubstrat bildet, und Zirconium enthält, und Zirconiumoxid-Mikrokristallen, die in dem amorphen Oxid dispergiert sind, besteht, umfasst, oder
(ii) die harte Beschichtung eine kristalline Schicht auf dem Metallsubstrat und eine amorphe Schicht auf der kristallinen Schicht umfasst, wobei die kristalline Schicht Kristalle von Oxid eines Metallelements, das das Metallsubstrat bildet, enthält und die amorphe Schicht aus einem amorphen Oxid, das das Metallelement, welches das Metallsubstrat bildet, und Zirconium enthält, und Zirconiumoxid-Mikrokristallen, die in dem amorphen Oxid dispergiert sind, besteht;

wobei die Zirconiumoxid-Mikrokristalle in der harten Beschichtung aus der Gruppe, bestehend aus tetragonalen Kristallen und kubischen Kristallen, ausgewählt sind
und die Konzentrationsverteilung des Zirconiums in der harten Beschichtung so ist, dass sich die Zirconiumkonzentration von der Oberfläche der harten Beschichtung in Richtung des Metallsubstrats allmählich verringert.

18. Metallbauteil gemäß Anspruch 17 (ii), wobei die kristalline Schicht außerdem Zirconiumoxid-Mikrokristalle dispergiert entlang einer Korngrenze und/oder in einem Korn der Kristalle von Oxid des Metallelements, das das Metallsubstrat bildet, enthält.

19. Metallbauteil gemäß einem der Ansprüche 17 und 18, wobei, wenn die harte Beschichtung durch Röntgendiffraktometrie analysiert wird, die relative Peak-Intensität in (111)-Ebene von tetragonalem Zirconiumoxid und/oder kubischem Zirconiumoxid gleich der oder höher als die relative Peak-Intensität des Hauptpeaks des Oxides des Metallelementes, das das Metallsubstrat bildet, ist.

**20.** Metallbauteil gemäß einem der Ansprüche 17 bis 19, wobei, wenn die harte Beschichtung durch Röntgendiffraktometrie analysiert wird, das Verhältnis des Volumens von monoklinischem Zirconiumoxid zu dem Gesamtvolumen des tetragonalen Zirconiumoxids und/oder des kubischen Zirconiumoxids und dem Volumen des monoklinischen Zirconiumoxids bis zu 0,5 ist.

**21.** Metallbauteil gemäß einem der Ansprüche 17 bis 20, wobei Mikrokristalle des tetragonalen Zirconiumoxids und/oder des kubischen Zirconiumoxids einen durchschnittlichen Korndurchmesser von 0,25 bis 500 nm haben.

**22.** Metallbauteil gemäß einem der Ansprüche 17 bis 21, wobei ein Phosphoroxid an einer Oberfläche, ausgewählt aus der Gruppe, bestehend aus einer Oberfläche der harten Beschichtung und einer Grenzfläche der harten Beschichtung mit dem Metallsubstrat, vorliegt.

**23.** Metallbauteil gemäß einem der Ansprüche 17 bis 22, wobei die harte Beschichtung außerdem wenigstens ein Element, ausgewählt aus der Gruppe, bestehend aus Yttrium, Calcium, Cer, Scandium, Magnesium und Titan, enthält.

**24.** Metallbauteil gemäß einem der Ansprüche 17 bis 23, wobei das Metallelement, das das Metallsubstrat bildet, ein Metall, ausgewählt aus der Gruppe, bestehend aus Aluminium, Titan, Niob, Magnesium, Tantal und der Legierung davon, ist.

**25.** Metallbauteil gemäß einem der Ansprüche 17 bis 24, das durch das Verfahren zur elektrolytischen Abscheidung einer Keramikbeschichtung auf einem Metall gemäß einem der Ansprüche 1 bis 10 hergestellt wurde.

## Revendications

**1.** Procédé d'électrodéposition d'un revêtement de céramique sur un métal dans lequel un traitement électrolytique est effectué en utilisant le métal comme une anode dans un électrolyte ayant un pH d'au moins 8 contenant un composé de carbonate de zirconium soluble dans l'eau choisi dans le groupe consistant en un carbonate de zirconium ammonium et un carbonate de zirconium potassium afin de former ainsi un revêtement de céramique sur une surface du métal.

**2.** Procédé d'électrodéposition d'un revêtement de céramique sur un métal selon la revendication 1, dans lequel l'électrolyte comprend en outre un composé de phosphore soluble dans l'eau.

**3.** Procédé d'électrodéposition d'un revêtement de céramique sur un métal selon la revendication 2, dans lequel le composé de phosphore soluble dans l'eau est un phosphate condensé.

**4.** Procédé d'électrodéposition d'un revêtement de céramique sur un métal selon l'une quelconque des revendications 1 à 3, dans lequel l'électrolyte comprend en outre un ion et/ou un oxyde d'au moins un métal choisi dans le groupe consistant en le titane, l'yttrium, le calcium, le magnésium, le scandium et le cérium.

**5.** Procédé d'électrodéposition d'un revêtement de céramique sur un métal selon l'une quelconque des revendications 1 à 4, dans lequel l'électrolyte comprend en outre des particules faiblement solubles d'au moins un élément choisi dans le groupe consistant en un oxyde, un hydroxyde, un phosphate et un carbonate.

**6.** Procédé d'électrodéposition d'un revêtement de céramique sur un métal selon l'une quelconque des revendications 1 à 5, dans lequel le traitement électrolytique est réalisé par une électrolyse par courant continu ou une électrolyse bipolaire en utilisant une forme d'onde de tension dans laquelle une composante CA est superposée sur une composante CC.

**7.** Procédé d'électrodéposition d'un revêtement de céramique sur un métal selon l'une quelconque des revendications 1 à 6, dans lequel le traitement électrolytique est effectué en utilisant une forme d'onde de tension dans laquelle au moins une onde d'impulsion choisie dans le groupe consistant en une onde rectangulaire, une onde sinusoïdale et une onde triangulaire ayant un facteur de marche allant jusqu'à 0,5 est superposée sur une composante CC ou CA.

8. Procédé d'électrodéposition d'un revêtement de céramique sur un métal selon la revendication 6 ou 7, dans lequel la valeur maximale de la forme d'onde de tension est d'au moins 400 V.

9. Procédé d'électrodéposition d'un revêtement de céramique sur un métal selon l'une quelconque des revendications 1 à 8, dans lequel le traitement électrolytique est effectué sous une décharge luminescente et/ou une décharge en arc provoquée sur la surface du métal utilisé comme anode.

10. Procédé d'électrodéposition d'un revêtement de céramique sur un métal selon l'une quelconque des revendications 1 à 9, dans lequel le métal est choisi dans le groupe consistant en l'aluminium, le titane, le niobium, le magnésium, le tantale et un alliage de ceux-ci.

11. Electrolyte à utiliser dans l'électrodéposition d'un revêtement de céramique sur un métal, contenant de l'eau, un composé de carbonate de zirconium soluble dans l'eau choisi dans le groupe consistant en un carbonate de zirconium ammonium et un carbonate de zirconium potassium, et au moins un élément choisi dans le groupe consistant en un ion de métal alcalin, un ion ammonium et un alcali organique à un pH d'au moins 8,0.

12. Electrolyte à utiliser dans l'électrodéposition d'un revêtement de céramique sur un métal selon la revendication 11, dans lequel l'électrolyte comprend en outre un composé de phosphore soluble dans l'eau.

13. Electrolyte à utiliser dans l'électrodéposition d'un revêtement de céramique sur un métal selon la revendication 12, dans lequel le composé de phosphore soluble dans l'eau est un phosphate condensé.

14. Electrolyte à utiliser dans l'électrodéposition d'un revêtement de céramique sur un métal selon l'une quelconque des revendications 11 à 13, dans lequel l'électrolyte comprend en outre un ion et/ou un oxyde d'au moins un métal choisi dans le groupe consistant en le titane, l'yttrium, le calcium, le magnésium, le scandium et le cérium.

15. Electrolyte à utiliser dans l'électrodéposition d'un revêtement de céramique sur un métal selon l'une quelconque des revendications 11 à 14, dans lequel l'électrolyte comprend en outre des particules faiblement solubles d'au moins un élément choisi dans le groupe consistant en un oxyde, un hydroxyde, un phosphate et un carbonate.

16. Electrolyte à utiliser dans l'électrodéposition d'un revêtement de céramique sur un métal selon l'une quelconque des revendications 11 à 15, dans lequel l'électrolyte est utilisé pour l'électrodéposition d'un revêtement de céramique sur un métal choisi dans le groupe consistant en l'aluminium, le titane, le niobium, le magnésium, le tantale et un alliage de ceux-ci.

17. Organe métallique comprenant un substrat métallique et un revêtement dur sur le substrat métallique, dans lequel :

(i) le revêtement dur comprend une couche amorphe qui est composée d'un oxyde amorphe contenant un élément métallique constituant le substrat métallique et du zirconium, et des microcristaux d'oxyde de zirconium dispersés dans l'oxyde amorphe ; ou
(ii) le revêtement dur comprend une couche cristalline sur le substrat de métal et une couche amorphe sur la couche cristalline, la couche cristalline contenant des cristaux d'oxyde d'un élément métallique constituant le substrat métallique, et la couche amorphe étant composée d'un oxyde amorphe contenant l'élément métallique constituant le substrat métallique et du zirconium, et des microcristaux d'oxyde de zirconium dispersés dans l'oxyde amorphe ;

dans lequel les microcristaux d'oxyde de zirconium dans le revêtement dur sont choisis dans le groupe consistant en les cristaux tétragonaux et les cristaux cubiques ;
et la distribution de concentration du zirconium dans le revêtement dur est telle que la concentration en zirconium baisse progressivement de la surface du revêtement dur vers le substrat métallique.

18. Organe métallique selon la revendication 17 (ii), dans lequel la couche cristalline contient en outre des microcristaux d'oxyde de zirconium dispersés le long d'un joint de grain et/ou dans un grain des cristaux d'oxyde de l'élément métallique constituant le substrat métallique.

19. Organe métallique selon l'une quelconque des revendications 17 et 18, dans lequel, lorsque le revêtement dur est analysé par diffractométrie de rayons X, une intensité de pic relative sur le plan (111) de l'oxyde de zirconium tétragonal et/ou de l'oxyde de zirconium cubique est supérieure ou égale à une intensité de pic relative du pic principal sur l'oxyde de l'élément métallique constituant le substrat métallique.

20. Organe métallique selon l'une quelconque des revendications 17 à 19, dans lequel, lorsque le revêtement dur est analysé par diffractométrie de rayons X, la proportion du volume d'oxyde de zirconium monoclinique par rapport à la totalité du volume d'oxyde de zirconium tétragonal et/ou d'oxyde de zirconium cubique et au volume de l'oxyde de zirconium monoclinique vaut jusqu'à 0,5.

21. Organe métallique selon l'une quelconque des revendications 17 à 20, dans lequel des microcristaux de zirconium tétragonal et/ou de l'oxyde de zirconium cubique ont un diamètre de grain moyen de 0,25 à 500 nm.

22. Organe métallique selon l'une quelconque des revendications 17 à 21, dans lequel un oxyde de phosphore est présent sur une surface choisie dans le groupe consistant en une surface du revêtement dur et une interface du revêtement dur avec le substrat métallique.

23. Organe métallique selon l'une quelconque des revendications 17 à 22, dans lequel le revêtement dur comprend en outre au moins un élément choisi dans le groupe consistant en l'yttrium, le calcium, le cérium, le scandium, le magnésium et le titane.

24. Organe métallique selon l'une quelconque des revendications 17 à 23, dans lequel l'élément métallique constituant le substrat métallique est un métal choisi dans le groupe consistant en l'aluminium, le titane, le niobium, le magnésium, le tantale et un alliage de ceux-ci.

25. Organe métallique selon l'une quelconque des revendications 17 à 24, produit par le procédé d'électrodéposition d'un revêtement de céramique sur un métal selon l'une quelconque des revendications 1 à 10.

## FIG.1

## FIG.2

# FIG.3

——————————— 50 μm

# FIG.4

——————————— 250 μm

# FIG.5

# FIG.6

(A)

(B)

# FIG.7

(A)

(×100,000)                    0.1 μm

(B)

(×400,000)                    25 nm

# FIG. 8

(A)

(Al,Zr)Oxide(Amorphous)

(B)

[1 1 1]$\gamma$-ZrO$_2$

# FIG.9

(A)

(B)

FIG. 10

EP 1 818 428 B1

Counts

(A) 1600 400 0

(B) 1600 400 0

(C) 1600 400 0

(D) 400 100 0

(E) 3600 1600 400 0

(F) 6400 1600 0

Position [° 2Theta]

10 20 30 40 50 60 70 80

○ Planes other than (111) plane of tetragonal ZrO₂ and/or cubic ZrO₂ ● (111) plane of tetragonal ZrO₂ and/or cubic ZrO₂

■ (-111) plane of monoclinic ZrO₂ □ (111) plane of monoclinic ZrO₂ ▲ (400) plane of cubic Al₂O₃ ◆ (101) plane of anatase TiO₂

★ (200) plane of cubic MgO

38

# FIG.11

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002508454 A
- US 4082626 A
- US 5616229 A
- JP 58017278 B
- JP 59028636 B
- JP 59028637 B
- JP 9310184 A